# EUROPÄISCHE PATENTSCHRIFT

(11) **EP 2 257 783 B1**
(45) Veröffentlichungstag und Bekanntmachung des Hinweises auf die Patenterteilung: **26.02.2014**
(21) Anmeldenummer: 09721332.6
(22) Anmeldetag: 23.03.2009
(51) Int. Cl.: G01N 21/03, B01L 3/00, B01L 9/00

(54) **KÜVETTE UND VERFAHREN ZUR OPTISCHEN UNTERSUCHUNG KLEINER FLÜSSIGKEITSMENGEN**
CUVETTE AND METHOD FOR OPTICALLY EXAMINING SMALL AMOUNTS OF LIQUID
CUVETTE ET PROCÉDÉ SERVANT À EFFECTUER L'EXAMEN OPTIQUE DE PETITES QUANTITÉS DE LIQUIDE

(30) Priorität: 21.03.2008 US 38596 P
(43) Veröffentlichungstag der Anmeldung: 08.12.2010
(73) Patentinhaber: EPPENDORF AG, 22339 Hamburg (DE)
(72) Erfinder: HARNACK, Kurt, 22889 Tangstedt (DE); KNOFE, Helmut, 22844 Norderstedt (DE); SCHEFFLER, Peter, 22399 Hamburg (DE); GOEMANN-THOSS, Wolfgang, 22359 Hamburg (DE); EIKELMANN, Sven, 22299 Hamburg (DE); JOLIE, Christoph, 22765 Hamburg (DE)
(74) Vertreter: Hauck Patent- und Rechtsanwälte
(86) Internationale Anmeldenummer: PCT/EP2009/002121
(87) Internationale Veröffentlichungsnummer: WO 2009/115345

(56) Entgegenhaltungen:
- WO-A2-2006/086459
- DE-A1- 2 726 498
- JP-A- 2007 271 560
- US-A1- 2002 140 931
- US-A1- 2006 109 468

## Beschreibung

### Gebiet der Erfindung

Die Erfindung betrifft die Analyse von flüssigen Proben mit einem Spektrometer oder Photometer oder anderen optischen Messvorrichtungen. Derartige Analysen erfolgen typischerweise, aber nicht ausschließlich, im molekularbiologischen, biochemischen, anorganisch-chemischen, organisch-chemischen und lebensmittelchemischen Labor. Proben werden z.B. in der Forschung, in der Diagnostik und in der Qualitätskontrolle optisch analysiert. Sie werden z.B. mittels Absorptions-, Reflektions-, Emissions-, Fluoreszenz- Raman- oder Lumineszenzspektroskopie im UV-VIS oder IR-Wellenlängenbereich analysiert. Beispiele für zu messende Analyte sind Biomolekülc wie Nukleinsäuren, Proteine, Lipide sowie anorganische oder organische Stoffe und Verbindungen. Diese Analyte können direkt oder nach chemischer Reaktion, die der Erleichterung der spektrometrischen oder photometrischen Analyse dient, gemessen werden.

Die Erfindung betrifft insbesondere alle beispielhaft genannten Anwendungen. Ein wesentlicher Einsatzbereich ist die Messung kostbarer Proben in geringen Mengen in der Molekularbiologie. Vielfach stehen nur geringe Probenmengen (z.B. unter 1 bis 5 Mikroliter) zur Verfügung, weil nicht mehr Material gewonnen werden kann. Bei Verdünnung der Proben würden aufgrund verringerter Absorptionen die Messergebnisse zu ungenau. Eine typische Anwendung ist die photometrische oder fluorimetrische Messung von Nukleinsäure-konzentrationen vor einer PCR oder Real-Time-PCR, um die für die PCR optimale Ausgangsmenge der Nukleinsäure einsetzen zu können. Ein weiteres Beispiel ist die Messung der Konzentration von Nukleinsäuren und in die Nukleinsäure eingebauten Markersubstanzen sowie daraus abgeleitet die Markierungsdichte bei markierten Nukleinsäuren, um vor dem Beginn eines Microarray-Expcriments die optimale Menge an markierter Nukleinsäure einsetzen zu können und sicher zu sein, dass die Markierungsdichte der Nukleinsäure im optimalen Bereich liegt.

### Stand der Technik

Für die spektrometrische oder photometrische Analyse werden flüssige Proben in Küvetten gefüllt. Standardküvetten sind für den Einsatz in die Küvettenschächte der meisten gängigen Spektrometer und Photometer geeignet. Diese Küvettenschächte werden nachfolgend auch als "Standardküvettcnschächte" bezeichnet. Weit verbreitet haben sich Standardküvettenschächte handelsüblicher optischer Messgeräte mit einem Querschnitt von 12,5 mm x 12,5 mm. Die Höhen des Lichtstrahles über dem Boden des Küvettenschachtes variieren gerätcabhängig von 8,5 mm bis 20 mm. Standardküvetten haben einen kastenförmigen Umriss, wobei der Querschnitt und die Höhe an die Maße der Standardküvettenschächte angcpasst sind.

Wiederverwendbare Standardküvetten aus Quarzglas für kleine Probenmengen werden insbesondere von den Firmen Hellma und Strana vertrieben. Diese Ultra-Mikro-Küvetten haben eine Schichtdicke von 1 mm oder mehr. Sie sind sehr schwierig blasenfrei zu befüllen und äußerst aufwendig zu leeren und zu reinigen. Da die Hauptanwendungen der optischen Messungen sehr kleiner Volumina in der Messung von Nukleinsäuren im UV-Bereich liegen, bestehen sie aus Quarzglas und sind besonders teuer. Da sie sehr teuer in der Anschaffung sind, müssen sie sorgsam behandelt werden. Für im Markt angebotene Ultra-Mikro-Küvetten aus Quarzglas muss ein Mindestvolumen von 5 Mikroliter eingesetzt werden, was für manche Anwendungen zuviel ist.

Andere Küvetten werden unter dem Begriff "MikroliterMesszelle" vertrieben. Die Firma Hellma vermarktet unter der Produktbezeichnung "Tray Cell®" und die Firma Implen unter der Produktbezeichnung "Label Guard" eine Mikrolitermesszelle, die in ihren Abmessungen einer Standardküvette entspricht und deshalb in vielen gängigen Spektralphotometern verwendet werden kann. Die Mikrolitermesszelle der Firma Hellma ist in der WO 2005/114146 A1 beschrieben. Für die Durchführung der Analyse muss ein Tropfen der zu analysierenden Flüssigkeit von etwa 1 bis 2 Mikroliter bei einer Schichtdicke von 0,2 mm bzw. 3 bis 5 Mikroliter bei einer Schichtdicke von 1 mm auf die Oberseite eines Messfensters aufgebracht werden. Die Messkammer wird durch einen Deckel verschlossen. Der Lichtstrahl der Messoptik wird über Strahlumlenkungen und faseroptische Lichtleiter sowie einen Spiegel im Deckel von der Strahlungsquelle durch die Probe zum Sensor geführt.

Die Mikrolitermesszelle ist konstruktiv sehr aufwendig und hat einen hohen Preis und ist deshalb nicht immer wirtschaftlich einsetzbar. Außerdem hat sie eine hohe gerätcabhängigc Eigenabsorption von ca. 1,3 E bei 230 bis 650 nm, um die der Messbereich des Messgcrätes verringert wird. Ferner besteht nach der Probenbefüllung und dem Deckelaufsctzen keine visuelle Überprüfbarkeit der Messlösung in der Messkammer, um z.B. störende Blasen, Partikel und Fehlpipettierungen erkennen zu können, die zu Fehlmessungen führen können. Nachteilig ist zudem, dass der Anwender nach einer Benutzung das Messfenster aufwendig reinigen muss.

Die Firma Tecan bietet unter der Produktbezeichnung "Nano Quant Plate" eine Art Klapp-Microplate für einen Microplate-Reader an.

Die Firma NanoDrop Technologies vermarktet unter der Produktbezeichnung "NanoDrop®" ein Photometer, das eine Analyse von Proben mit einem Volumen von nur einem Mikroliter ermöglicht. Das Spektrophotometer ist in der WO 2006/086459 A2 beschrieben. Das System sieht die direkte optische Messung in einem Flüssigkeitstropfen vor, der sich zwischen zwei horizontal ausgerichteten, planaren Flächen befindet. Eine Lichtquelle beleuchtet die Flüssigkeitsprobe von der Seite durch den Spalt zwischen den beiden Flächen. In der unteren Fläche mündet ein Faserlichtleiter, der das Licht nach Durchtritt durch die Probenflüssigkeit zu einem faseroptischen Spektrophotometer weiterleitet. Die Probenflüssigkeit ist also in direktem Kontakt mit der Glasfaser.

Nachteilig an dem Spektrophotometer ist, dass die optische Oberfläche durch bestimmte Proben beeinträchtigt werden kann. Nach der Betriebsanweisung des Spektrophotometers vom Typ NanoDrop-1000 sind dieses z.B. proteinhaltige Lösungen. In diesem Fall muss der Anwender nach mehrfacher Benutzung die optische Oberfläche manuell durch intensives, langwieriges, starkes Abreiben neu konditionieren. Auch können stark saure oder alkalische Lösungen nicht eingesetzt werden.

Ferner ist die Probe in direktem, offenem Kontakt mit der Umgebung. Gefährliche Substanzen können daher nicht mit diesem System untersucht werden. Gefahrstoffe, wie potentiell infektiöse Substanzen, werden aber im molekularbiologischen, zellbiologischen, biochemischen und chemischen Labor häufig eingesetzt. Für diese Proben ist das System ungeeignet. Aufgrund des offenen Kontakts der Probe mit der Umgebung können Proben kontaminiert werden. Dies kann die Messung verfälschen. Außerdem ist eine Rückgewinnung kostbarer Proben nach der Messung nicht ohne Risiko einer Kontamination möglich.

Das Spektrophotometer ist ein sehr teures Messsystem. Es umfasst eine Messeinheit und einen PC und hat einen großen Platzbedarf. Die Probe kann schnell verdunsten und leicht kontaminiert werden, weil die Mantelfläche des offenen Flüssigkeitstropfens direkten Kontakt zur Umgebung hat.

Die US2002/0140931A1 beschreibt eine stationäre Probenaufnahme-Vorrichtung eines optischen Instruments, deren Arme außen mit Faseroptiken und einem Aktuator zum Steuern des Armes verbunden sind, sodass sie nicht in einen Standardküvettcnschacht einsetzbar ist.

Eine weitere stationäre Küvette mit an den Außenseiten der Arme angesetzten Faseroptiken ist in der WO2006/086459A2 beschrieben.

Die DE2726498A1 beschreibt einen Adapter, der in einen rechteckigen Küvettenschacht einsetzbar ist, und eine in den Adapter einsetzbare, starre Küvette.

### Kurze Zusammenfassung der Erfindung

Davon ausgehend liegt der Erfindung die Aufgabe zugrunde, eine Vorrichtung zur Verfügung zu stellen, die für optische Untersuchung geringer Probenmenge mit hoher Genauigkeit mittels herkömmlichen optischen Messvorrichtungen geeignet ist.

Ferner soll ein Verfahren zur Verfügung gestellt werden, das die optische Untersuchung besonders kleiner Probenmengen ermöglicht.

Die Aufgabe wird durch eine Küvette gemäß Anspruch 1 gelöst. Ausgestaltungen der Küvette sind in Unteransprüchen angegeben.

Schließlich wird die Aufgabe durch Verfahren gemäß Anspruch 14 gelöst. Ausgestaltungen des Verfahrens sind in weiteren Unteransprüchen angegeben.

Die erfindungsgemäße Küvette umfasst mindestens jeweils eine Messfläche an zwei Armen, die schwenkbar miteinander verbunden sind, so dass sie aus einer auseinander geschwenkten Lage in eine Messposition zusammenschwenkbar sind, in der die beiden Messflächen einen Abstand voneinander zum Positionieren einer Probe zwischen den Messflächen aufweisen, und Mittel zum Positionieren der beiden Arme in Messposition in einem Küvettenschacht einer optischen Messvorrichtung mit einer Probe zwischen den beiden Messflächen in einem den Küvettenschacht durchquerenden Strahlengang der optischen Messvorrichtung.

Gemäß einer Ausgestaltung umfasst eine erfindungsgemäße Küvette mindestens jeweils eine Messfläche an zwei Armen, die - vorzugsweise über ein Gelenkschwenkbar miteinander verbunden sind, so dass sie aus einer auseinandergeschwenkten Lage in eine Messposition zusammenschwenkbar sind, in der die Arme in einem Küvettenschacht positionierbar sind und die beiden Messtlächen einander zugewandt sind und einen Abstand voneinander aufweisen. Diese Ausgestaltung hat als Mittel zum Positionieren eine an den Küvettenschacht angepasste Form der in Messposition zusammengeschwenkten Arme. Diese Küvette ist durch die Form der zusammengeschwenkten Arme an den Küvettenschacht angepasst, so dass eine zwischen den Messflächen gehaltene Probe im Strahlengang angeordnet ist, wenn die Küvette in den Küvettenschacht eingesetzt ist. Infolgedessen werden die Arme dieser Küvette nachfolgend auch als "Adapterteile" und beide Arme zusammen als "Adapter" bezeichnet.

Gemäß einer anderen Ausgestaltung umfasst eine erfindungsgemäße Küvette mindestens einen Einsatz mit zwei Messflächen und einen Adapter zum Einsetzen in einem Küvettenschacht einer optischen Messvorrichtung und Mittel von Einsatz und Adapter zum lösbaren Halten des mindestens einen Einsatzes am Adapter mit den Messflächen in einem Abstand voneinander zum Positionieren einer Probe zwischen den Messflächen in einem den Küvettenschacht durchquerenden Strahlengang der optischen Messvorrichtung.

Bei dieser Ausgestaltung hat der Adapter eine an einen Küvettenschacht angepasste Form, so dass eine zwischen den Messflächen des Einsatzes gehaltene Probe im Strahlengang angeordnet ist, wenn der Einsatz in den Adapter eingesetzt und der Adapter in den Küvettenschacht eingesetzt ist.

Die Küvette weist Mittel zum Positionieren der beiden in Messposition angeordneten Arme in einem Standardküvettenschacht auf. Ein Standardküvettenschacht im Sinne dieser Anmeldung hat einen rechteckigen, insbesondere quadratischen Querschnitt. Ferner hat er eine Grundfläche von 12,5 mm x 12,5 mm. Zudem verläuft der Strahlengang in einem Abstand von 8,5 mm bis 20 mm über dem Boden des Küvettenschachtes. Gemäß einer weiteren Ausgestaltung verläuft der Strahlengang in einem Abstand von 8,5 mm oder 15 mm über dem Boden des Küvettenschachtes. Der Querschnitt der Küvette, z.B. der Querschnitt der zusammengeschwenkten Arme oder der Querschnitt des Adapters für die Aufnahme des Einsatzes, ist an den Querschnitt des Standardküvettenschachtes angcpasst. Gemäß einer Ausgestaltung sind die Messflächen so in der Küvette positioniert, dass ihr Zentrum den obigen Abstand des Strahlenganges vom Boden des Küvettenschachtes aufweist.

Gemäß einer Ausgestaltung hat die Küvette Mittel zum Positionieren der beiden in Messposition angeordneten Arme in verschiedenen Positionen in einem Küvettenschacht. Gemäß weiteren Ausgestaltungen sind dies Mittel zum Positionieren in verschiedenen Höhen- und/oder in verschiedenen horizontalen Positionen im Küvettenschacht. Diese Mittel können z.B. ausziehbare bzw. ausschraubbare Füße der Küvette sein oder durch eine asymmetrische Anordnung der Messflächen in Verbindung mit einer Anordnung der Küvette in verschiedenen Drehstellungen im Küvettenschacht ausgeführt sein. Sie dienen z.B. der Anpassung an die Höhe des Strahlenganges der Messvorrichtung oder der Messung verschiedener Proben auf den Messflächcn einer Küvette in derselben Mcssvorrichtung.

Im Sinne der Erfindung ist eine Küvette eine Vorrichtung, die dazu bestimmt ist, Proben für optische Untersuchungen zu positionieren. Eine erfindungsgemäße Küvette muß also nicht in konventioneller Weise als Gefäß mit einer durch Boden- und Seitenwände umschlossenen Aufnahme für Flüssigkeit ausgestaltet sein, wobei eine solche Ausgestaltung jedoch auch nicht ausgeschlossen ist.

Bei den erfindungsgemäßen Küvetten wird ein geringes Volumen einer flüssigen Probe zwischen den beiden Messflächen positioniert. Durch die Oberflächenspannung der Flüssigkeit bildet sich eine Säule zwischen den beiden Messflächen aus, durch die eine optische Messung durchgeführt werden kann. Der Adapter dient dazu, die Messflächen in bevorzugt vertikaler Ausrichtung so in einem Küvettenschacht zu positionieren, dass ohne weitere Änderungen des Lichtweges in einem herkömmlichen Photometer oder Spektrometer gemessen werden kann. Hierzu ist der Adapter bevorzugt auf die Abmessungen eines Standardküvettenschachtes abgestimmt, so dass er wie eine Standardküvette eingesetzt werden kann. Der Adapter kann aber auch auf einen Küvettenschacht mit anderen Abmessungen als ein Standardküvettenschacht abgestimmt sein.

Der Einsatz und/oder Adapter kann für Mehrfachgebrauch oder als Consumable oder Disposable für Einmalgebrauch ausgeführt sein. Der Einsatz und/oder der Adapter kann aus einem oder mehreren Kunststoffen und/oder einem oder verschiedenen Materialien hergestellt sein. Einsatz und Adapter können alternativ unlösbar verbunden sein bzw. aus einer einzigen Vorrichtung bestehen.

Der Einsatz und/oder der Adapter ist beispielsweise aus Metall (z.B. Aluminium oder Edelstahl) und/oder aus einem oder mehreren Kunststoffen bzw. Hartkunststoffen bzw. Hartkunststoffen (z.B. Polystyrol, PVC, Polypropylen, Polyethylen) hergestellt. Die Messflächen oder Einsatzteile, welche die Messflächen aufweisen, sind z.B. aus optisch transparenten Kunststoffen (z.B. Topas oder Polystyrol), Quarzglas oder aus einem anderen optisch transparenten Glas (z.B. BK 7) hergestellt. Für die Messung von Nukleinsäuren ist eine Kombination eines Adapters aus Aluminium mit Messflächen bzw. Einsatzteilen aus Quarzglas besonders gut geeignet.

Die Messflächen können auch alternativ so ausgestattet sein, z. B. durch entsprechende Oberflächengestaltung, dass mehrere Proben auf ihr angeordnet sein können. Die Proben können verschieden sein oder als identische Proben auf die Messfläche aufgebracht werden.

Gemäß möglicher Ausgestaltungen sind die beiden Messflächen an zwei Armen eines Einsatzes, insbesondere einer Pinzette, oder an zwei Adapterteilen eines als Klappvorrichtung ausgebildeten Adapters angeordnet, mit deren Hilfe eine zwischen den beiden Messflächen angeordnete Probe in Messrichtung ausgerichtet werden kann. Hierbei können die beiden Messflächen einteilig mit den beiden Armen oder Adapterteilen verbunden sein, die ihrerseits wiederum einteilig miteinander verbunden sein können. Bei auseinandergeschwenkten Armen oder Adapterteilen stehen die Messflächcn so zueinander, dass ein ausreichend großer Freiraum zum Aufbringen der flüssigen Probe, z.B. in Form eines Tropfens, gewährleistet ist. Die Probe kann auf nur eine oder auf beide Messflächen aufgebracht werden. Durch Zusammenschwenken der beiden Arme oder Adapterteile wird erreicht, dass das Medium beide Messflächen benetzt und sich dazwischen eine Flüssigkeitssäule ausbildet. Alternativ kann die Flüssigkeit auch direkt in einen Spalt zwischen den beiden Messflächen eingebracht werden, so dass auf eine Relativbewegung der Messflächen zueinander verzichtet werden kann. Hierfür kann die Flüssigkeit zwischen relativ zueinander beweglichen Messflächen eingebracht werden, die auf einen geeigneten Abstand voneinander gebracht worden sind. Ferner kann hierfür die Flüssigkeit zwischen zwei Messfläche eingebracht werden, die einen unveränderlichen Abstand voneinander aufweisen.

Durch unterschiedlich große Abstände zwischen den beiden Messflächcn können Messungen mit Volumina von unter einem Mikroliter bis zu mehreren Mikrolitern in einer Küvette realisiert werden. Gemäß einer bevorzugten Ausgestaltung sind die Abstände zwischen den beiden Messflächen so bemessen, dass Proben mit Volumina im Bereich von 0,2 bis 5 Mikroliter dazwischen gehalten werden können. Weiterhin bevorzugt sind die Abstände zwischen den Messflächen so bemessen, dass die Volumina der Proben, die dazwischen gehalten werden können, etwa 1 bis 3 Mikroliter betragen. Die Küvette kann so auf ein bestimmtes Volumen ausgelegt sein, wobei die Messflächen nur in einem bestimmten Abstand voneinander im Strahlengang gehalten werden können.

Die Positionierung einer flüssigen Probe auf eine der beiden Messflächen, z.B. eines Einsatzes oder einer Klappvorrichtung, kann mit Hilfe einer Pipette erfolgen. Hierbei kann eine Pipette mit oder ohne Führung an der Messfläche angesetzt werden. Nach Abgabe der erforderlichen Probemengen werden die Arme der Pinzette oder Klappvorrichtung zusammengeschwenkt.

Ein Einsatz kann nach Aufbringen der Probe in einen Adapter eingesetzt und in vertikaler Ausrichtung in einem Küvettenschacht positioniert werden.

Ein Einsatz für einen in einen Küvettenschacht einer optischen Messvorrichtung einsetzbaren Adapter hat zwei Messflächen und Mittel zum Halten am Adapter mit den Messflächen in einem Abstand voneinander zum Positionieren einer Probe zwischen den Messflächen in einem dem Küvettenschacht durchquerenden Strahlengang der optischen Messvorrichtung.

Bei den Mitteln zum lösbaren Halten des Einsatzes kann es sich insbesondere um Konturen bzw. eine äußere Geometrie des Einsatzes handeln, die auf eine Kontur bzw. Geometrie des Adapters abgestimmt ist, so dass der Einsatz mit dem Adapter zusammenfügbar ist

Der Einsatz kann vorteilhaft eines oder mehrere Merkmale des Einsatzes der zuvor erläuterten erfindungsgemäßen Küvette aufweisen, die mindestens einen Einsatz und einen Adapter umfasst.

Ein Adapter für mindestens einen Einsatz mit zwei Messflächen ist in einen Küvettenschacht einer optischen Messvorrichtung einsetzbar und weist Mittel zum lösbaren Halten des mindestens einen Einsatzes mit den Messflächen in einem Abstand voneinander zum Positionieren einer Probe zwischen den Messflächen in einem den Küvettenschacht durchquerenden Strahlengang der optischen Messvorrichtung auf.

Der Adapter kann vorteilhaft eines oder mehrere Merkmale des Adapters der zuvor erläuterten erfindungsgemäßen Küvette aufweisen, die mindestens einen Einsatz und einen Adapter umfasst.

Bei dem Mittel zum lösbaren Halten des Adapters kann es sich insbesondere um eine Kontur bzw. Geometrie des Adapters handeln, die auf eine Kontur bzw. Geometrie eines Einsatzes abgestimmt ist, so dass der Adapter mit dem Einsatz zusammenfügbar ist.

Eine Klappvorrichtung aus zwei gelenkig miteinander verbundenen Armen bzw. Adapterteilen hat die Form einer handelsüblichen Küvette, wenn die beiden Adapterteile zusammengeschwenkt sind. Die Messflächen können insbesondere an auswechselbar eingebauten Einsatzteilen aus Quarzglas oder aus Kunststoff vorhanden sein. Ferner können sie einteilig und/oder nicht lösbar mit den Armen bzw. Adapterteilen verbunden sein. Beispielsweise sind die Arme mit den Messflächen einteilig aus Kunststoff hergestellt. Dabei sind die Arme bevorzugt einteilig miteinander verbunden, z.B. über ein Filmscharnier. Einsatzteile aus Quarzglas oder auswechselbare Einsatzteile aus Kunststoff können insbesondere in Küvetten für mehrfachen Gebrauch vorhanden sein. Klappküvetten für mehrfachen Gebrauch können insbesondere Arme bzw. Adapterteile aus Metall aufweisen. Ein Arm bzw. Adapterteil aus Metall oder aus einem anderen, nicht optisch transparentem Material (z.B. einem opaken Kunststoff) kann als Blende zur Begrenzung des Lichtdurchganges durch das Messvolumen ausgestaltet sein.

Eine Klappküvette kann aus Kunststoff oder aus einem anderen Material für mehrfachen Gebrauch oder als Disposable für Einmalgebrauch ausgeführt sein. Die beiden Adapterteile können über ein Filmscharnier einteilig gelenkig miteinander verbunden sein oder jeweils Gelenkteile haben, die miteinander zu einem Gelenk verbunden sind. Die Adapterteile können als Blenden zur Abschirmung des Messvolumens vor überschüssigem Licht dienen. Hierfür können die Adapterteile ganz oder teilweise aus eingefärbtem Kunststoff bestehen oder lichtundurchlässige Beschichtungen tragen. Beispielsweise weist die Klappküvette Adapterteile aus UV-undurchlässigem Kunststoff und Einsätze aus UV-transparentem Kunststoff auf.

Gemäß einer Ausgestaltung sind Mittel zum lösbaren Verriegeln der beiden Adapterteile in der Mcssposition vorhanden. Insbesondere bei Adapterteilen aus Metall können dies eingebaute Magnete sein. Insbesondere bei Adaptcrteilen aus Kunststoff können elastische Rasthaken vorhanden sein, die mit Rastkanten zusammenwirken. Die Rasthaken und Rastkanten können einteilig mit den Adapterteilen aus Kunststoff ausgebildet sein.

Bei sämtlichen vorgenannten Erfindungsvarianten kann der Strahlengang der optischen Messvorrichtung quer durch die Messflächen hindurch verlaufen, wozu die Messflächen bzw. die Messflächcn aufweisenden Einsatzteile durchsichtig oder klar bzw. optisch transparent ausgeführt sind. Gemäß einer anderen Ausgestaltung verläuft der Strahlengang der optischen Messvorrichtung parallel zu den Messflächen durch offene Seiten des Abstandsbereichs zwischen den Messflächen hindurch. Dann können die Messflächen auch lichtundurchlässig ausgeführt sein. Obgleich bei dieser Ausgestaltung der Strahlengang nicht durch die Messflächen hindurch verläuft, werden sie als "Messflächen" bezeichnet, weil sie den Tropfen für die Messung im Strahlengang positionieren.

Grundsätzlich können Messflächen eine gekrümmte oder eine andere Form aufweisen. Gemäß einer bevorzugten Ausgestaltung sind die Messflächen plan. Bei Anordnung der Messflächen an der Seite eines Einsatzteiles (z.B. eines Plättchens) bzw. einer Wand sind bevorzugt beide Seiten des Plättchens bzw. der Wand planar. Grundsätzlich können die planaren Messflächen eine beliebige Ausrichtung zueinander haben. Beispielsweise können sie in einem Winkel zueinander ausgerichtet sein. Gemäß einer bevorzugten Ausgestaltung sind die Messflächen planparallel zueinander angeordnet. Die planparallele Anordnung planarer Messflächen dient insbesondere dem Durchtritt des Strahlengangs durch die Messflächen ohne störende Ablenkung des Lichtstrahles.

Grundsätzlich können die Messflächen verschiedene Ausrichtungen zueinander haben, beispielsweise derart, dass die Messflächen zueinander Winkel in allen drei Raumachsen annehmen. Gemäß einer bevorzugten Ausgestaltung haben die Messflächen eine einander überdeckende Anordnung. Bevorzugt sind die Messflächen an planparallelen Plättchen in einander überdeckender Anordnung vorhanden.

Gemäß einer Ausgestaltung weist der Abstand der Messflächen voneinander in Messposition 5 mm oder weniger auf. Bei dem genannten Abstand werden viele der zu untersuchenden flüssigen Proben aufgrund von Kapillarkräften zwischen den Messflächen gehalten. Bevorzugt beträgt der Abstand 0,1 bis 2 mm. Besonders bevorzugt beträgt der Abstand etwa 1 Millimeter.

Ferner wird die Aufgabe durch ein Verfahren zur optischen Untersuchung kleiner Flüssigkeitsmengen mit den Merkmalen von Anspruch 14 gelöst.

Das erfindungsgemäße Verfahren zur optischen Untersuchung kleiner Flüssigkeitsmengen wird unter Verwendung einer Küvette gemäß einem der Ansprüche 1 bis 13 durchgeführt.

Gemäß einem weiteren Verfahren zur optischen Untersuchung kleiner Flüssigkeitsmengen werden zwei Flüssigkeitstropfen auf zwei vorzugsweise planaren Messflächen aufgebracht, die Tropfen durch Annähern der beiden Messflächen aneinander in Kontakt miteinander gebracht, so dass die Tropfen zu einem einzigen Tropfen zusammenfließen, und dieser Tropfen einer optischen Messung unterzogen wird.

Durch das Aufbringen eines reduzierten Messvolumens auf beide Messflächen und die anschließende Positionierung bzw. Zusammenführung der Flächen zueinander kann eine Volumenreduzierung erzielt werden. Die addierte Höhe zweier Tropfen mit halbem Volumen ist nämlich größer, als die Höhe eines einzelnen Tropfens mit dem gesamten Volumen. Somit kann eine Benetzung beider Messflächen auch mit geringerem Volumen erreicht werden.

Gemäß einer weiteren Variante werden bei einem weiteren Verfahren zur optischen Untersuchung kleiner Flüssigkeitsmengen zwei in einem Abstand voneinander angeordnete Messflächen gleichzeitig mit einer flüssigen Probe benetzt, so dass der Tropfen durch seine Oberflächenspannung zwischen den Messflächen aufgespannt wird, und dieser Tropfen einer optischen Messung unterzogen wird.

Dieses Verfahren der Positionierung der Probenmenge unter gleichzeitiger Benetzung beider Messflächen direkt bei der Aufbringung der Flüssigkeit bewirkt ebenfalls eine Reduzierung der benötigten Probenmenge. Für die Positionierung der Probe kann eine Pipette verwendet werden. Eine Führung der Pipettenspitze vor und während des Pipettiervorgangs kann diesen Effekt begünstigen.

Eine sichere und handhabungsfreundliche Positionierung von Tropfen kann bei sämtlichen Erfindungsvarianten durch eine Führung der Pipettenspitze bei der Aufnahme und/oder Abgabe der Flüssigkeit erleichtert werden.

Die erfindungsgemäße Küvette ist so ausgestaltet, dass sie als Standardküvette in einen Standardküvettenschacht hineinpaßt. Sie kann aber auch so ausgestaltet sein, dass sie in einen Küvettenschacht anderer herkömmlicher oder zukünftiger optischer Messvorrichtungen einsetzbar ist.

### Kurze Beschreibung der Zeichnungen

In den Zeichnungen zeigen:
- Fig. 1: Pinzette mit planaren Messflächen an den freien Enden und geöffneten Armen in einer Perspektivansicht schräg von der Seite;
- Fig. 2: dieselbe Pinzette mit zusammen geschwenkten Armen in derselben Perspektivansicht;
- Fig. 3: einen Adapter mit einer Aufnahme für die Pinzette in einer Perspektivansicht schräg von oben und von der Seite;
- Fig. 4: denselben Adapter mit eingesetzter Pinzette in einem perspektivischen Röntgenbild;
- Fig. 5: eine Pipettenspitze mit planaren Messflächen am unteren Ende in einer Perspektivansicht schräg von unten und von der Seite;
- Fig. 6: einen Adapter mit einer Aufnahme und der darin eingesetzten Pipettenspitze in einer Perspektivansicht schräg von oben und von der Seite;
- Fig. 7: die Pipettenspitze eingesetzt in den Adapter in der Draufsicht;
- Fig. 8: die Pipettenspitze eingesetzt in den Adapter in einer Seitenansicht;
- Fig. 9: ein Slide mit einer planaren Messfläche in einer Perspektivansicht schräg von oben und von der Seite;
- Fig. 10: einen Adapter für die Aufnahme zweier Slides in geöffnetem Zustand in einer Perspektivansicht schräg von oben und von der Seite;
- Fig. 11: der Adapter bestückt mit zwei Slides in aufgeklapptem Zustand in einer Perspektivansicht schräg von unten und von der Seite;
- Fig. 12: der Adapter bestückt mit den Slides in zusammengeklapptem Zustand in einer Perspektivansicht auf zwei Seiten;
- Fig. 13: ein Adapter bestückt mit planaren Messflächen aufweisenden Einsatzteilen mit auseinandergesehwenkten Adaptcrteilen einer Perspektivansicht schräg von unten und von einer Seite;
- Fig. 13.1: eine Variante des Adapters mit einer Aussparung zum Einsetzen einer Pipettenspitze mit auseinander geschwenkten Armen in einer Perspektivansicht;
- Fig. 14: derselbe Adapter mit zusammengeschwenkten Adapterteilen in derselben Perspektivansicht;
- Fig. 14.1: derselbe Adapter mit zusammen geschwenkten Armen in einer Perspektivansicht;
- Fig. 14.2: derselbe Adapter mit zusammen geschwenkten Armen in einer Seitenansicht;
- Fig. 15: Einsatzteil mit planarer Messfläche mit flüssigkeitsbenetzenden und flüssigkeitsabwcisenden Zonen in einer Ansicht schräg auf die planare Messfläche und auf die Seite;
- Fig. 16: dasselbe Einsatzteil in einer Perspektivansicht auf die gegenüberliegende planare Augenseite;
- Fig. 17: planare Messfläche mit Vertiefung in einem Längsschnitt;
- Fig. 18: planare Messfläche mit mehreren Überlaufkammern in einer Draufsicht;
- Fig. 19: planare Messfläche mit einer Überlaufkammer in der Draufsicht;
- Fig. 20: planare Messfläche mit flüssigkeitsbenetzenden Zentralbereich und flüssigkeitsabweisenden Randflächen in einem Längsschnitt;
- Fig. 21: planare Messflächen mit einem aufgesetzten Tropfen vor Annäherung der Messflächen in einem Längsschnitt;
- Fig. 22: dieselben Mcssflächen nach Annäherung in einem Längsschnitt;
- Fig. 23: zwei planare Mcssflächen mit zwei aufgesetzten Tropfen vor Annäherung der Messflächen im Längsschnitt;
- Fig. 24: dieselben Messflächen nach Annäherung in einem Längsschnitt;
- Fig.25: Magnetverriegelung zweier Messflächen in Messposition in einem Längsschnitt;
- Fig. 26: Küvette mit einem zu zwei Seiten hin offenen Kapillarkanal in einer Seitenansicht;
- Fig. 27: dieselbe Küvette in einer anderen Seitenansicht;
- Fig. 28: dieselbe Küvette in einer Perspektivansicht schräg von zwei Seiten;
- Fig. 29: einen Einsatz mit mehreren Messflächen mit auseinander geschwenkten Armen in einer Perspektivansicht;
- Fig. 30: derselbe Einsatz in einem Adapter eingesetzt in einer Perspektivansicht.

### Detaillierte Beschreibung der Ausführungsbeispiele

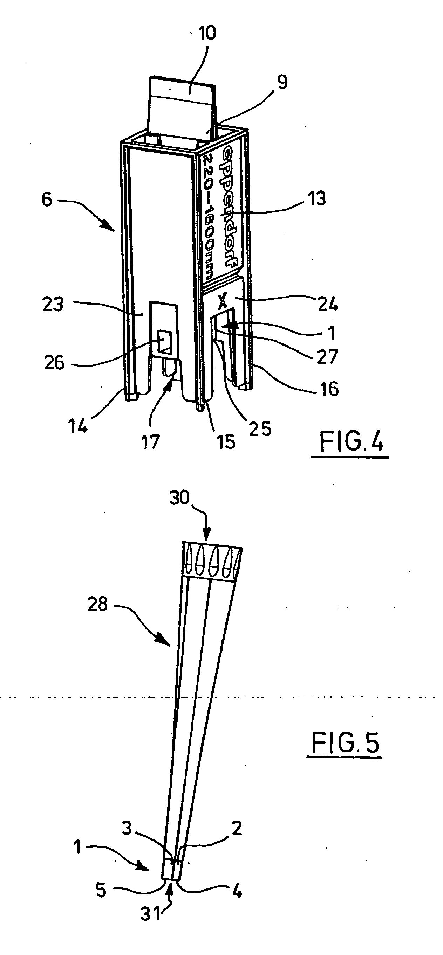

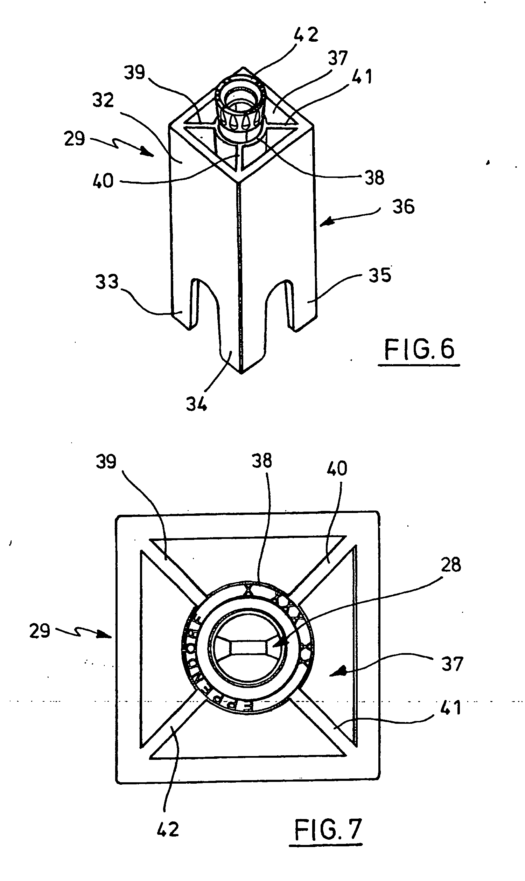

Die Küvetten gemäß Fig. 5 bis 8 sind nicht Gegenstand dieser Anmeldung. Sie sind lediglich zur Veranschaulichung der beanspruchten Erfindung beschrieben.

Nachfolgend beziehen sich die Angaben "oben" und "unten" auf die Ausrichtung, die die betreffenden Vorrichtungsteile bei Anordnung in einem Küvettenschacht eines Photometers oder Spektrometers aufweisen.

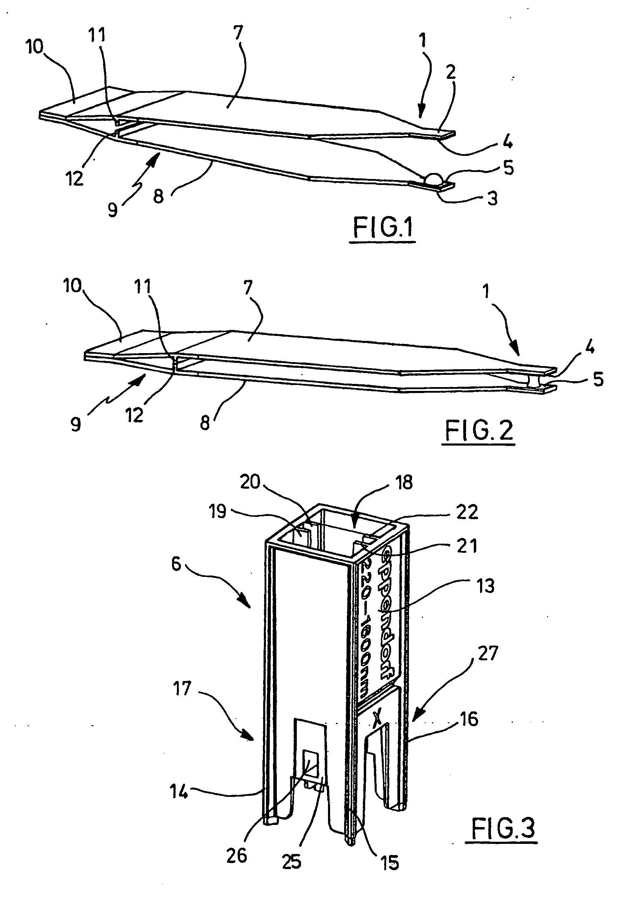

Die in den Fig. 1 bis 4 gezeigte Küvette besteht aus mindestens zwei Teilen.

Eine Vorrichtung 1 bestehend aus zwei Plättchen 2, 3 mit planaren Messflächen 4, 5 an den Innenseiten und einem Adapter 6 zum Positionieren der Vorrichtung 1 in einem konventionellen Photometer, Spektrophotometer oder dgl.

Im Beispiel sind die Plättchen 2, 3 der Vorrichtung 1 an den freien Enden der Arme 7, 8 einer Pinzette 9 angeordnet. Die Arme 7, 8 sind im unteren Bereich zu den Plättchen 2, 3 hin angeschrägt. Die Arme 7, 8 sind an den oberen Enden bei 10 vorzugsweise fest miteinander verbunden. Die Arme 7, 8 sind elastisch zusammenschwenkbar. Die Zusammenschwenkbarkeit der beiden Arme 7, 8 wird begrenzt durch an den Innenseiten der Arme 7, 8 angeordnete Abstandshalter 11, 12 in Form zweier quer zu den Armen verlaufender Rippen vorzugsweise in der Nähe der Messflächen.

Der Adapter 6 selbst hat den quaderförmigen Umriss einer Standardküvette. Er ist im Oberbereich 13 ringsum geschlossen und weist unten vier Füße 14 bis 17 auf.

Der Adapter 6 hat innen einen Hohlraum 18, wobei innen an zwei einander gegenüberliegenden Seitenwänden jeweils zwei parallele Führungsschienen 19, 20, 21, 22 für die Pinzette 9 angeordnet sind. Die Pinzette 9 ist mit zusammengeschwenkten Armen gemäß Fig. 2 in die von den Führungsschienen 19 bis 22 gebildete Führung einsetzbar.

Die Führungsschienen 19 bis 22 sind unten durch nach innen geneigte Begrenzungswände 23, 24 begrenzt, deren Neigung der Neigung der Anschrägungen der Arme 7, 8 der Pinzette 9 entspricht. Die Begrenzungswände 23, 24 stehen innen von den Seitenwänden vor, welche die Führungsschienen 19 bis 22 tragen.

An die unteren Ränder der Begrenzungswände 23, 24 ist ein kastenförmiges Unterteil 25 eingesetzt. Dieses weist an einander gegenüberliegenden Stirnflächen Durchgangsöffnungen 26, 27 auf.

Die Konstruktion des Adapters 6 entspricht damit im Wesentlichen der Küvette gemäß deutschern Patent DE 198 26 470 C1, das durch Bezugnahme einbezogen ist. Die Abweichungen von der vorbekannten Konstruktion bestehen darin, dass die Innenseiten der Seitenwände mit den Führungsschienen 19 bis 22 versehen sind und das kastenförmige Unterteil 25 Durchgangsöffnungen 26, 27 aufweist.

Die Pinzette 9 kann als Disposable ausgeführt sein. Der Adapter 6 kann ebenfalls ein Disposable oder wiederverwendbar sein. Bevorzugt sind Pinzette 9 und Adapter 6 aus Kunststoff hergestellt.

Ein geringes Volumen der zu analysierenden Flüssigkeit wird zwischen den optisch transparenten Messflächen 4, 5 der Vorrichtung 1 positioniert. Der Adapter 6 dient dazu, die Vorrichtung 1 mit den planaren Messflächen 4, 5 anschließend in vertikaler Ausrichtung so in einem Küvettenschacht zu positionieren, daß ohne weitere Änderungen des Lichtwegs in einem konventionellen Photometer bzw. Spektrometer gemessen werden kann.

Die Pinzette 9 kann eine Einführungshilfe aufweisen, die eine einfache "Befüllung" der Mcssflächen 4, 5 ermöglicht. Im geöffneten Zustand stehen die Arme 7, 8 der Pinzette 9 so zueinander, dass eine ausreichend großer Freiraum zur Aufbringung der Probe, z.B. in Form eines Tropfens, auf eine der planaren Messflächen 4, 5 gewährleistet ist. Durch Zusammendrücken der beiden Arme 7, 8 werden die planaren Messflächen 4, 5 am Ende der Arme 7, 8 auf einander zu bewegt, so dass der Tropfen beide Messflächen 4, 5 benetzt. Dabei können die planaren Messflächen 4,5 so geformt und/oder beschichtet sein, dass die Ausbreitungsrichtung des Mediums zur Messrichtung hin begünstigt wird und bei Überdosierung nur in eine Richtung, z.B. nach oben, entweichen kann. Durch die beiden Abstandshalter 11, 12, vorzugsweise nahe der planaren Messflächen 4, 5, werden die Arme 7, 8 so positioniert, dass eine definierte optische Schichtdicke zwischen den Messflächen 4, 5 entsteht. Mittels verschiedener Pinzetten 9 mit unterschiedlich großen Schichtdicken können Messungen mit Volumina von einem Mikroliter bis mehreren Mikrolitern in einem Adapter 6 realisiert werden.

Die Pinzette 9 kann zusätzlich eine Arretierfunktion enthalten, die es dem Anwender ermöglicht, die Pinzette 9 in geschlossenem Zustand, in dem die Abstandshalter 11, 12 aneinander anliegen, aus der Hand zu legen.

Ferner kann die Pinzette 9 zusätzlich Ausrichtvorrichtungen enthalten, die die Mcssflächen 4, 5 parallel ausrichten.

Die Pinzette 9 wird in geschlossenem Zustand in die Führungsschienen 19 bis 22 des Adapters 6 eingesetzt, bis die Anschrägungen der Arme 7, 8 an den geneigten Begrenzungswänden 23, 24 des Adapters anliegen. In dieser Position sind die Plättchen 2, 3 vertikal in dem Adapter 6 angeordnet und mit den Außenseiten auf die Durchtrittsöffnungen 26, 27 ausgerichtet. Die Pinzette 9 kann von den Führungsschienen 19 bis 22 im geschlossenen Zustand gehalten werden.

Bei Anordnung des Adapters 6 im Küvettenschacht eines Photometers oder Spektrometers sind die Durchtrittsöffnungen 26, 27 im Strahlengang der Messoptik angeordnet, so dass dieses zur optischen Messung der Probe zwischen den Messflächen 4, 5 genutzt werden kann.

Der Adapter 6 kann so ausgeführt sein, dass ein Austritt der flüssigen Probe bei Fehlbehandlung, z.B. bei Erschütterung, verhindert wird. Er kann außerdem einen Blendencharakter aufweisen, wodurch eine universelle Nutzung unabhängig vom Spektrometertyp möglich ist. Der Adapter 6 kann wie eine Küvette als Disposable ausgeführt sein, jedoch ist ein Austausch nur im Falle einer Fehlhandhabung notwendig.

Die Küvette von Fig. 5 bis 8 ist nicht Gegenstand dieser Anmeldung. Sie ist lediglich zur Veranschaulichung der beanspruchten Erfindung beschrieben.

Die Küvette gemäß Fig. 5 bis 8 besteht aus mindestens zwei Teilen, nämlich einer Messspitze 28 und einem Adapter 29. Die Messspitze 28 hat ein oberes Ende mit einer oberen Öffnung 30, mit der sie auf einen Befestigungsansatz einer z.B. handelsüblichen Pipette aufklemmbar ist. Ferner hat sie ein unteres Ende mit einer unteren Öffnung 31. Die untere Öffnung 31 ist durch eine Vorrichtung 1 umfassend zwei transparente Plättchen 2, 3 mit planaren und vorzugsweise planparallelen Messflächen 4, 5 an den Innenseiten begrenzt. Seitlich ist der Abstandsbereich zwischen den Plättchen 2, 3 geschlossen, so dass der Abstandsbereich nur unten bei 31 geöffnet ist.

Zwischen der oberen Öffnung 30 und der unteren Öffnung 31 ist in der Messspitze 28 ein durchgehender Kanal ausgebildet. Außen hat die Messspitze 28 eine sich von oben nach unten verjüngende Form.

Der Adapter 29 ist ebenfalls kastenförmig ausgebildet und an einen Standardküvettenschacht angepasst. Im Oberbereich 32 ist er am Umfang geschlossen und unten weist er vier Füße 33 bis 36 auf. Innen hat der Adapter 29 einen Hohlraum 37, in dem eine Aufnahme 38 angeordnet ist. Die Aufnahme 38 ist an die Außcnkontur der Messspitze 28 angepasst. Die Aufnahme 38 ist über radial verlaufende Rippen 39, 40, 41, 42 innen an den Wänden des Adapters 29 abgestützt.

Die Mcssspitze 28 kann analog zu einer konventionellen Pipettenspitze auf einen Befestigungsansatz einer z.B. handelsüblichen Pipette aufgesteckt werden, mittels der das zu messende Medium zwischen die Plättchen 2, 3 eingcsogen werden kann. Dabei benetzt das Medium die planaren Messflächen 4, 5. Durch verschiedene Messspitzen 28 mit unterschiedlich großen Abständen zwischen den Messflächen 4, 5 können unterschiedlich große Messreservoirs für Messungen mit Volumina von unter einem Mikroliter bis zu mehreren Mikrolitern bzw. unterschiedliche Schichtdicken in einer Küvette realisiert werden. Insbesondere bei Ausgestaltung für die Messung sehr geringer Volumina kann die zu messende Probe bereits durch Kapillarkräfte zwischen die Platten 2, 3 gezogen werden. Eine Aufnahme der Probe mit Hilfe einer z.B. handelsüblichen Pipette ist dann nicht nötig.

Die befüllte Messspitze 28 wird mittels einer Pipette in den Adapter 29 eingesetzt. Die Form der Aufnahme 38 ist so auf die Form der Messspitze 28 abgestimmt, dass die eingesetzte Messspitze mit den Plättchen 2, 3 in den Freiräumen zwischen den Füßen 33 bis 36 angeordnet ist. Die Küvette 29 kann dann mit der eingesetzten Messspitze 28 in einen Küvettenschacht eingesetzt werden, so dass der Lichtweg der optischen Messvorrichtung zwischen einander gegenüber liegenden Freiräumen zwischen jeweils einem Paar Füße 33, 34 und 35, 36 und quer durch die beiden Plättchen 2, 3 und die darin befindliche Probe hindurch verläuft. Die Probenaufnahme wird durch hydrophile Oberflächen begünstigt.

Der Adapter 29 kann so ausgeführt sein, dass ein Austritt der zu messenden Flüssigkeit bei Fehlhandhabung - z.B. bei starker Erschütterung - verhindert wird. Er kann weiterhin als Führung zur korrekten Ausrichtung der planaren Messflächen 4,5 zur Messrichtung des Photometers dienen. Ferner kann er einen Blendencharakter aufweisen, wodurch eine universelle Nutzung unabhängig vom Spektrometertyp möglich ist.

Messspitze 28 und Adapter 29 können jeweils als Consumable ausgeführt werden. Die Messspitze 28 kann nach jeder Messung ausgetauscht werden. Ein Austausch des Adapters 29 kann auf Fälle einer Fehlbehandlung beschränkt werden.

Die nachfolgenden beiden Ausführungsbeispiele umfassen zwei klappbarc Adapterteile, die vorzugsweise unverlierbar über ein Gelenk miteinander verbunden sind. Zusammengeklappt bilden die Adapterteile einen Adapter mit den Abmessungen z.B. einer Standardküvette. Das Gelenk kann an der kurzen oder der langen Seite der Vorrichtung angebracht sein. Auseinandergeklappt wird die zu messende Probe entweder auf nur eine oder auf beide Messflächen aufgebracht.

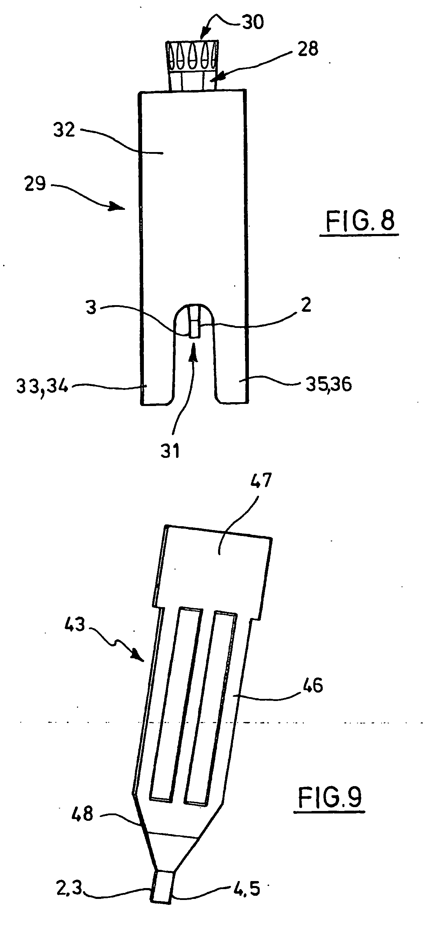

Die Küvette gemäß Fig. 9 bis 12 umfasst zwei plattenförmige Probenträger ("Slides") 43, 44 und einen Adapter 45. Die Probenträger 43, 44 sind identisch. Sie haben am oberen Ende eines streifenförmigen Mittelteils 46 einen verbreiterten Griff und Wegbegenzer 47. Unten ist der streifenförmige Mittelteil 46 bei 48 konisch verjüngt. Am unteren Ende haben die Slides 43, 44 jeweils ein Plättchen 2, 3 mit der planaren Messfläche 4 bzw. 5 vorzugsweise auf einer Seite.

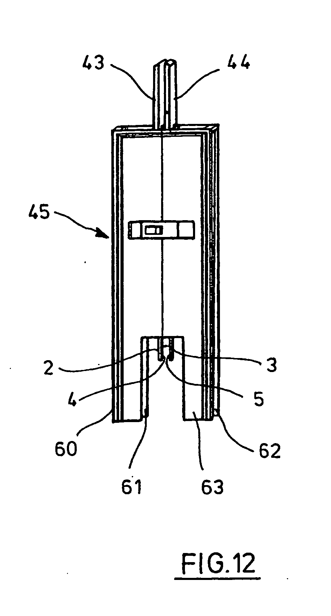

Der Adapter 45 umfasst zwei Adapterteile 49, 50, die über ein Filmscharnier 51 gelenkig miteinander verbunden sind. Zusammengeklappt bilden die Adapterteile 49, 50 gemäß Fig. 12 einen Adapter 45, dessen Form im Wesentlichen der des Adapters 6 gemäß Fig. 3 und 4 entspricht. Im Unterschied zu dem Adapter 6 weist jedoch der Adapter 45 in beiden Adapterteilen 49, 45 jeweils eine komplette Führung aus vier Führungsschienen 52 bis 55 sowie 56 bis 59 auf.

Der Adapter 45 und die Slides 43, 44 bestehen vorzugsweise aus Kunststoff.

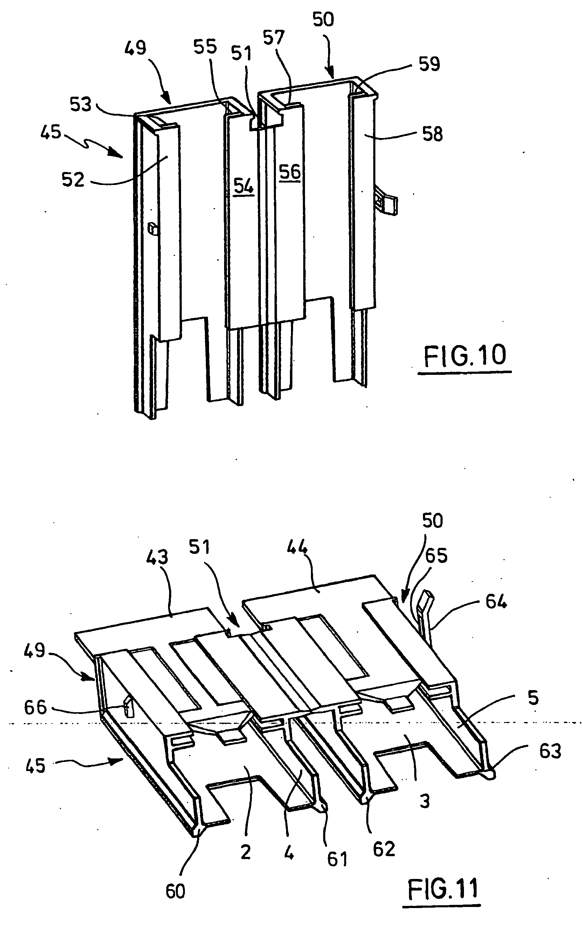

Gemäß Fig. 11 sind zwei Slides 43, 44 in die Führungen 52 bis 55 sowie 56 bis 59 eingesteckt, bis der Griff und Wegbegrenzer 47 am oberen Rand der beiden Adaptcrteile 49, 50 zur Anlage kommt. In dieser Lage sind die Plättchen 2, 3 in Ausnchmungen zwischen Füßen 60, 61 des Adapterteiles 49 und 62, 63 des Adapterteiles 50 angeordnet. Ferner kann eine Verrastung der Slides 43, 44 mit den Führungen 52 bis 55 sowie 56 bis 59 vorgesehen sein.

Dann wird auf die planare Messfläche 4 ein Tropfen der zu messenden Flüssigkeit aufgebracht. Danach werden die beiden Adapterteile 49, 50 zusammengeklappt, wobei die Flüssigkeit in Kontakt mit der Messflächen 5 kommt.

Die zusammengeklappten Adapterteile 49, 50 werden mittels eines Rasthakens 64 mit einer Rastausnehmung 65 an dem Adapterteil 50 und einem Rastvorsprung 66 an dem Adapterteil 49 miteinander verriegelt. Dabei wird der Rasthaken 64 mit seiner Rastausnehmung 65 auf den Rastvorsprung 66 aufgeschoben. Durch Betätigen des Rasthakens 64 in Gegenrichtung kann die Verriegelung gelöst werden.

Gemäß Fig. 12 kann der geschlossene Adapter 45 in einen Standardküvettenschacht eingesetzt werden, wobei der Strahlengang der optischen Messvorrichtung durch die Aussparungen zwischen den Füßen 60, 61 und 62, 63 durch die beiden Plättchen 2, 3 hindurchtritt.

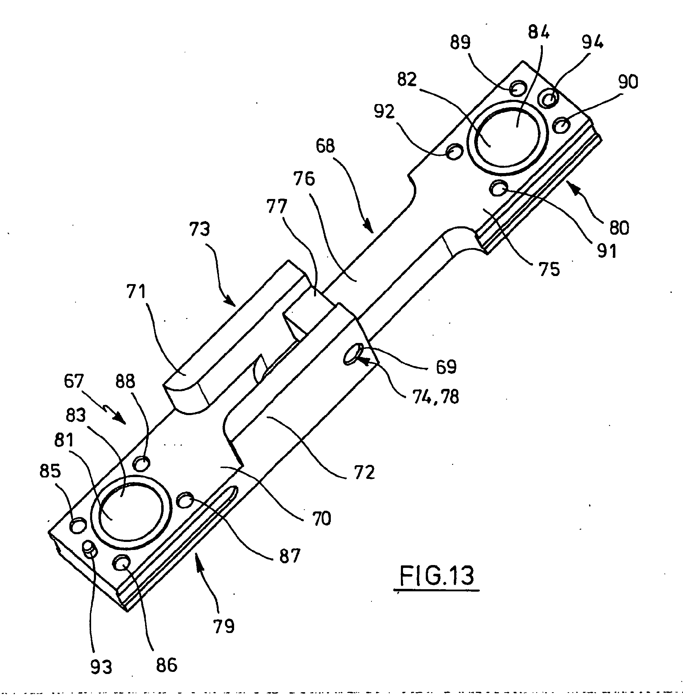

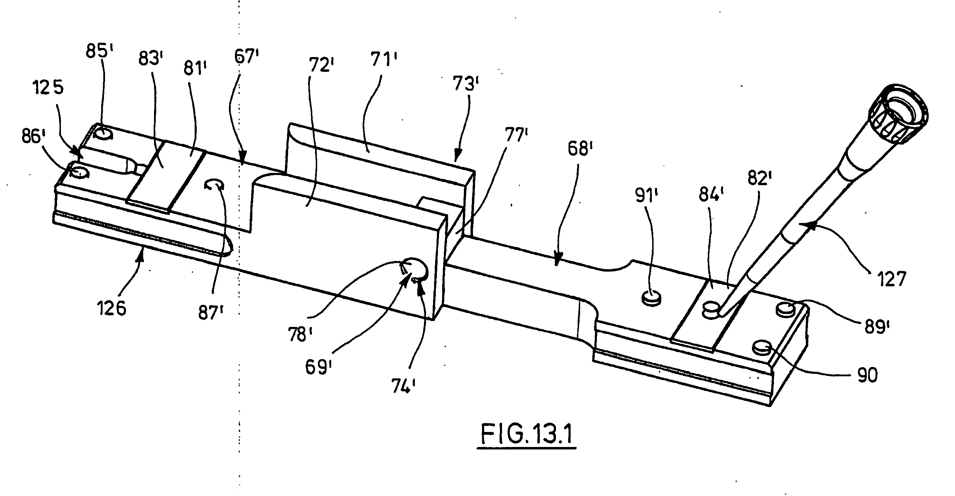

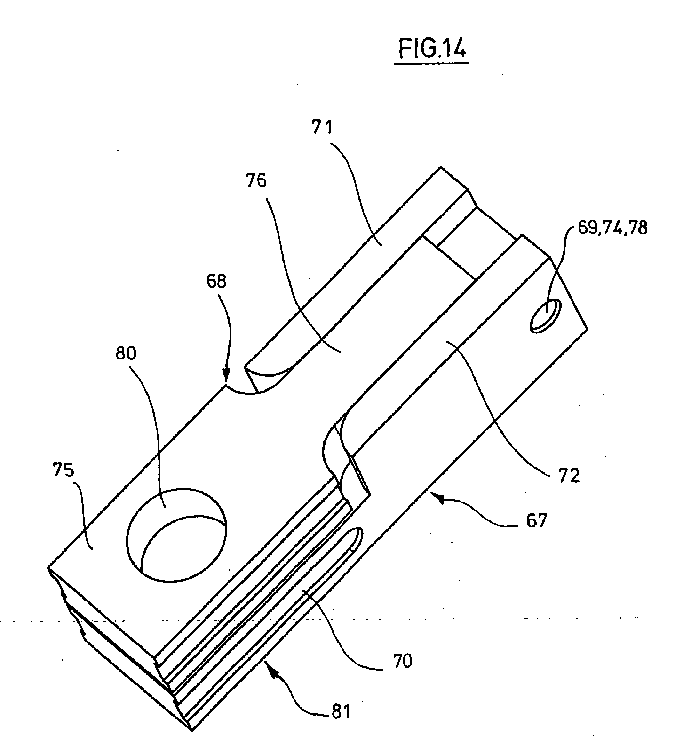

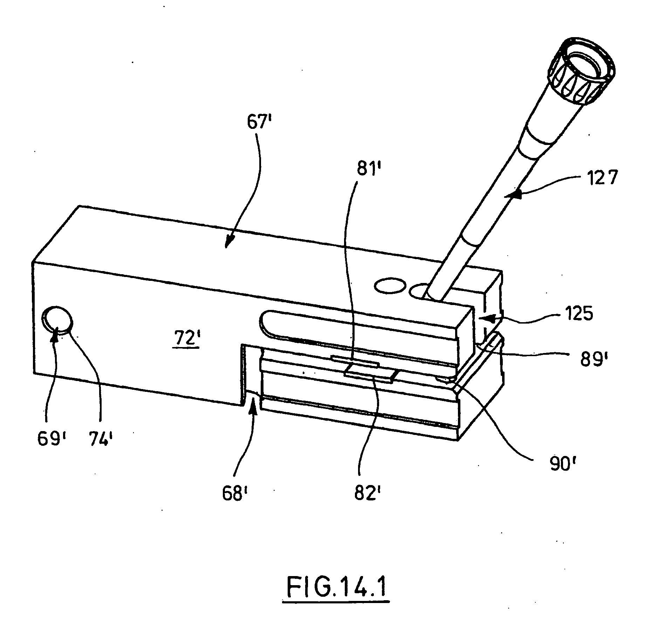

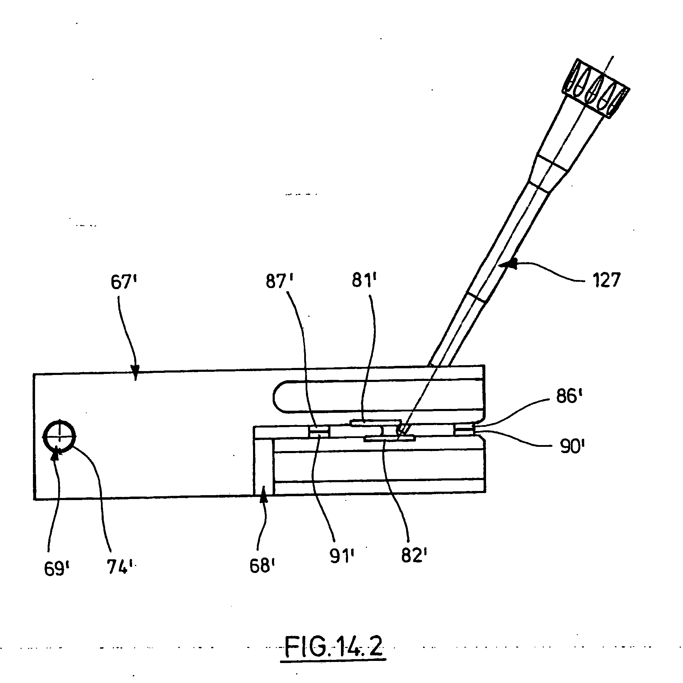

Bei der Küvette gemäß Fig. 9 bis 12 sind die Arme bzw. Adapterteile 49, 50 entlang einer Längsseite aneinandergelenkt. Bei der Küvette gemäß Fig. 13 und 14 haben die Arme bzw. Adapterteile 67, 68 eine gelenkige Verbindung 69 entlang einer Querachse.

Hierfür hat das Adapterteil 67 ein plattenförmiges Basisteil 70, das im Oberbereich auf einer Seite außen zwei Stege 71, 72 aufweist. In den Stegen 71, 72 sind Lageraugen 73, 74 des Drehgelenks 69 angeordnet.

Das Adapterteil 68 besteht grundsätzlich aus einem plattenförmigen Trägerteil 75, der mit einem Ende eines Verbindungsarmes 76 verbunden ist, der anderenends einen Lagerblock 77 trägt. Der Lagerblock 77 ist zwischen den Schenkeln 71, 72 angeordnet, wobei durch eine zentrale Durchgangsbohrung des Lagerblocks 77 eine Achse oder Welle 78 hindurchgeführt ist, die beidenends in den Lageraugen 73, 74 gehalten ist.

Das Basisteil 70 und das Trägerteil 75 haben Durchtrittsöffnungen 79, 80, die im zusammengeklappten Zustand der Adapterteile 67, 68 miteinander fluchten. An den Innenseiten der Durchtrittsöffnungen 79, 80 sitzen plattenförmige Einsatzteile 81, 82 mit planaren Messflächen 83, 84 an den Innenseiten.

Vorzugsweise haben das Basisteil 70 und das Trägerteil 75 jeweils innen eingesetzte Magnete 85 bis 88 und 89 bis 92, die im zusammengeklappten Zustand jeweils paarweise aneinander anliegen. Ferner steht von dem Basisteil 70 ein Zentrierstift 93 vor, dem eine Zentrieraufnahme 94 des Trägerteils 75 zugeordnet ist.

Vorteilhaft ist es, wenn der Abstand zwischen den Messflächcn 83, 84 bei der Herstellung der Küvette über die Magnetpaare eingestellt wird. Dies kann z.B. durch Einsetzen der Magnete 85 bis 92 in Klebebetten erreicht werden. Diese lässt man bei geschlossener Küvette aushärten, wobei die korrekte Ausrichtung der Magnete 85 bis 92 über ein zwischen den Messflächen 83, 84 eingelegtes Passstück sichergestellt wird. Wahlweise kann das Klebebett jeweils eines Magnetes 85 bis 92 jeden Paares bereits vor dem Schließen ausgehärtet sein. Um das System ohne verbleibende Freiheitsgrade, jedoch nicht überbestimmt auszulegen ist der Einsatz von drei Magnetpaaren vorteilhaft. Außerdem ist es aus demselben Grund vorteilhaft, das Drehgelenk 69 der Küvette schwimmend, also mit Spiel, in Bezug auf die Achse senkrecht zu den Messflächen 83, 84 auszulegen.

Eine Probe kann in geöffnetem Zustand des Adapters auf eine oder beide planare Grenzflächen 81, 82 aufgebracht werden. Nach Zuklappen der Adaptcrteile 67, 68 ist der Adapter in einen Standardküvettenschacht einsetzbar. Der Lichtweg der optischen Messvorrichtung durchläuft die Durchtrittsöffnungen 79, 80, die dahinter angeordneten transparenten Plättchen 81, 82 und die dazwischen befindliche Probe.

Die Einsatzteile 81, 82 sind z.B. aus UV-durchlässigern Quarzglas oder aus UV-durchlässigem Kunststoff. Gegebenenfalls sind sie mit einer speziellen Oberflächenstruktur versehen.

Die Begrenzungen der Durchgangslöcher 80, 81 bilden Blenden, die bewirken, daß das Messlicht des Photometers oder Spektrometers nur die Probe durchstrahlt. Die Adapterteile 67, 68 bestehen vorzugsweise aus Kunststoff.

Die Adapterteile 67, 68 können aus einem anderen Material ausgeführt sein, beispielsweise aus Metall, insbesondere wenn sie zur Wiederverwendung bestimmt sind. Bei einer weiteren Variante können die Adapterteile 67, 68 aus dem gleichen Kunststoff bestehen wie die Einsatzteile 81, 82 und gegebenenfalls untrennbar als Spritzgussteil hergestellt werden.

Die Küvette kann insbesondere so ausgeführt werden, dass nach dem Zusammenklappen ein Spalt verbleibt, über den der Bereich zwischen den Messflächen 83, 84 einsehbar ist. Dieser kann dafür genutzt werden, die Klappküvette in geschlossenem Zustand zu befüllen. Zur Erleichterung der Befüllung kann der Spalt zu den Messflächen hin um eine Aussparung erweitert werden.

Eine weitere Variante, die eine Befüllung der Küvette in geschlossenem Zustand ermöglicht, ist in den Fig. 13.1, 14.1 und 14.2 dargestellt. Bei der Befüllung der Küvette in geschlossenem Zustand werden beide Messflächen 83, 84 gleichzeitig benetzt. Dies hat den Vorteil, dass ein geringeres Volumen zur Herstellung einer Flüssigkeitsbrücke zwischen den Messflächen 83, 84 benötigt wird. Außerdem kann auf diese Weise die Verdunstung der Probe während der Handhabung reduziert werden.

In Fig. 13.1, 14.1 und 14.2 sind die Elemente, die Elementen der Ausführung von Fig. 13 und 14 entsprechen, mit denselben Bezugsziffern bezeichnet, die jedoch mit einem hochgestellten Strich (') gekennzeichnet sind.

Zum Befüllen im geschlossenen Zustand mit Hilfe einer Pipette hat die Ausführung von Fig. 13.1, 14.1 und 14.2 im Arm 67 eine Aussparung 125, die sich am freien Ende des Armes 67' von seiner Außenseite 126 bis zur Messfläche 83' erstreckt. Die schlitzartige Aussparung 125 ist so geformt und bemessen, dass das untere Ende einer Pipettenspitze 127 hineinpasst und darin seitlich geführt wird. Ferner ist das Einsatzteil 81' etwas näher am Drehgelenk 69' als das Einsatzteil 82' angeordnet, so dass die Probe mittels der Pipettenspitze 127 direkt auf die Messfläche 84' und in den Zwischenraum zwischen dem Messflächen 83', 84' dosiert werden kann.

Bei dieser Ausgestaltung sind die Einsatzteile 81', 82' streifenförmig ausgebildet und lösbar oder fest mit den Armen 67', 68' verbunden. Das Drehgelenk 69' ist als schwimmendes Gelenk ausgebildet, z.B. in dem die Achse oder Welle 78' entweder in einer Durchgangsbohrung mit Übermaß des Lagerblockes 77' angeordnet und in die Lageraugen 73', 74' eingepresst oder in die Durchgangsbohrung eingepresst und in den Lagerangen 73', 74' mit Übermaß angeordnet ist. Ferner weist die Ausführung drei Magnetpaare 85' bis 87' und 89' bis 91' zum Verriegeln der Arme 67', 68' in Messposition auf.

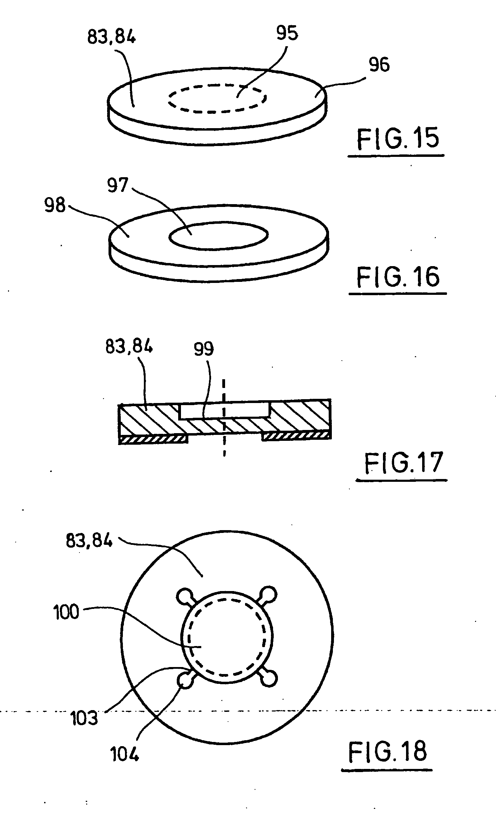

Gemäß Fig. 15 und 16 sind die optisch transparenten Messflächen 83, 84 im Zentrum mit einem zentralen flüssigkeitsbcnctzenden Flächenteil 95 ausgeführt, um das herum ein flüssigkeitsabweisender Flächenteil 96 vorhanden ist. Die flüssigkeitsbenetzenden und flüssigkeitsabweiscnden Eigenschaften der Bereiche 95, 96 können durch Beschichtungen hergestellt werden. Zwischen den beiden Flächen teilen 95, 96 ist keine mechanische Kante vorhanden, die beim Reinigen der Messflächen 83, 84 stört. Die Messflächcn 83,84 werden vom Flächenteil 95 ausgehend zum Flächenteil 96 hin gereinigt, damit keine Restverunreinigungen im zentralen Flächenteil 95 verbleiben.

Dem flüssigkeitsbenetzenden Flächenteil 95 entspricht ein lichtdurchlässiger Flächenteil 97 und dem flüssigkeitsabweisenden Flächenteil ein lichtundurchlässiger Flächenteil 98 an der Außenseite des Einsatzteiles 83, 84.

Die Flächenteile 95, 96 begrenzen die Ausbreitung der flüssigen Probe auf den Messflächen 83, 84. Am flüssigkeitsabweisenden bzw. hydrophoben Flächenteil hat der Flüssigkeitstropfen einen großen Kontaktwinkelpunkt. Infolgedessen steht er hoch über die Messflächen 83, 84 hinaus. Im flüssigkeitsbenetzenden bzw. hydrophilen Flächenteil 95 wird der Tropfen hingegen festgehalten bzw. verankert. Infolgedessen entstehen keine flachen, sondern etwa halbkugelförmige Flüssigkeitstropfen, so dass beim Zusammenklappen der Adapterteile 67, 68 ein auf eine Messfläche 83 oder 84 aufgebrachter Tropfen die andere Messfläche 84, 83 sicher benetzt oder auf beide Messflächen 83, 84 aufgebrachte Tropfen sich sicher vereinigen. Infolgedessen entsteht eine definierte Flüssigkeitssäule und damit eine definierte Messstrecke bzw. Schichtdicke.

Die Plättchen 2, 3 der übrigen Ausführungsbeispiele können an den Messflächcn 4, 5 und den Außenseiten entsprechend ausgebildet sein.

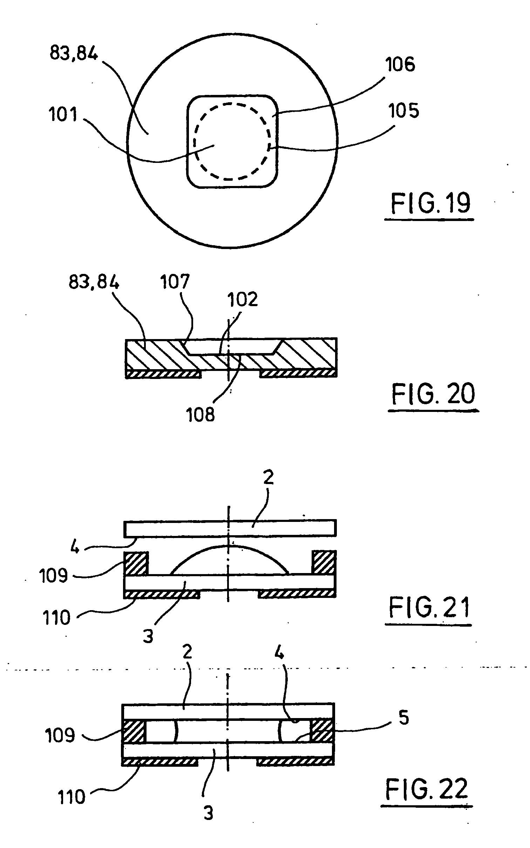

Bei den Ausführungsbeispielen gemäß Fig. 17 bis 20 sind in den Messflächen 83, 84 unterschiedlich ausgeformte Vertiefungen 99, 100, 101, 102 angeordnet. Die Vertiefungen 99 bis 102 nehmen Proben auf und begrenzen deren Ausbreitung auf den Messflächen 83, 84. Gemäß Fig. 18 und 19 kann überschüssige Probenmenge über radiale Kanäle 103 in Vorratskammer 104 oder über eine Überlaufkante 105 in eine Überlaufkammer 106 entweichen. Bei dem Ausführungsbeispiel von Fig. 20 ist die Vertiefung 102 nach außen konisch erweitert. Zudem kann die die Erweiterung begrenzende Randfläche 107 flüssigkeitsabweisend sein und die Basisfläche 108 flüssigkcitsbenetzend, damit der Tropfen möglichst hoch von der Messfläche 83, 84 vorsteht.

Zur Begrenzung der Tropfenausbreitung kann auch ein planares Podest mit geringer Fläche auf der Messfläche 83, 84 angeordnet sein. Das planare Podest verhindert die Ausdehnung des Tropfens aufgrund seiner Oberflächenspannung. Dies bewirkt einen Anstieg der Tropfenhöhe und es kann eine Reduzierung der erforderlichen Probenmenge erzielt werden.

Die Ausbildung der Messflächen gemäß Fig. 17 bis 20 oder mit einem Podest kann bei sämtlichen Ausführungsbeispielen verwirklicht werden.

Gemäß Fig. 21 und 22 kann die Dicke der Schicht zwischen den beiden Messflächen 4, 5 durch einen Abstandsring 109 definiert werden. Auf der Außenseite des Plättchens 3 ist eine Blende 110 als Beschichtung aufgebracht.

In diesem Beispiel wird nur auf die Messfläche 5 ein Tropfen aufgebracht, der die Messfläche 4 bei Anlage am Abstandsring 9 benetzt.

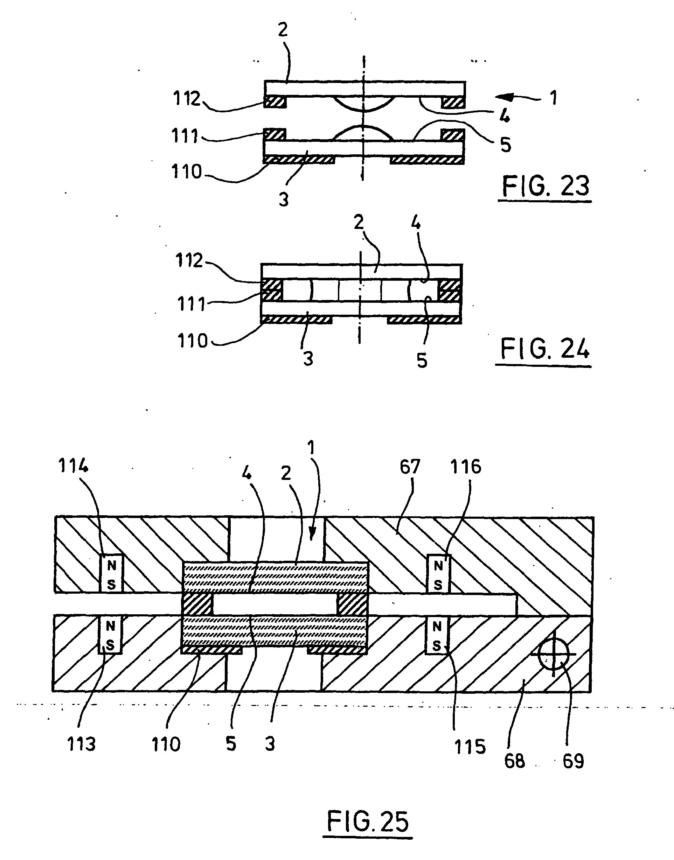

Bei dem Ausführungsbeispiel gemäß Fig. 23 und 24 sind beiden Messflächen 4, 5 Abstandsringe 111, 112 zugeordnet, die bei geschlossener Vorrichtung miteinander in Kontakt kommen. In diesem Beispiel ist die Schichtdicke durch beide Abstandsringe 111, 112 definiert. Gezeigt ist ferner die Aufbringung von Tropfen auf beiden Messflächen 4, 5, die bei geschlossener Vorrichtung 1 zusammenfließen.

Das Ausführungsbeispiel von Fig. 25 unterscheidet sich von dem gemäß Fig. 21 und 22 dadurch, dass die definierte Schichtdicke vorzugsweise durch Magnetkräfte von Magneten 113, 114, 115, 116 garantiert wird, deren ungleichnamige Pole bei geschlossener Vorrichtung 1 in kurzern Abstand voneinander angeordnet sind. Die Magnete 113 bis 116 sind in Vorrichtungsteile (z.B. Adapterteile 67, 68) der Küvette integriert, welche die Einsätze 2, 3 aufnehmen.

Damit die Planparallelität der Messflächen 4, 5 gewährleistet ist, kann ein zwischen den Vorrichtungsteilen 67, 68 ausgebildetes Gelenk 69 schwimmend ausgeführt sein, so dass das System nicht geometrisch überbestimmt ist. Im geschlossenen Zustand ist das Mcssgut in der zwei Adapterteile 67, 68 aufweisenden Klappküvette definiert, sicher und stabil positioniert.

Eine weitere Ausführung der Erfindung stellt eine nicht im Einzelnen dargestellte Magazinierung der Einmalteile dar. Aus einem leicht handhabbaren Magazin vorzugsweise in Kartuschenform können die Einsätze 2,3 für Einmalgebrauch leicht in dafür vorgesehene Öffnungen einer wieder verwendbaren Klappküvette eingesteckt werden. Nach Gebrauch werden die Einmaleinsätze 2, 3 von Hand oder mittels einer Vorrichtung oder mittels eines Ansatzes an der Kartusche aus dem klappbaren Adapter herausgedrückt und weggeworfen. Neue Einsätze 2, 3 können dann wieder eingesetzt werden.

Die Einmalteile können auch mit als Einmalteil ausgeführten zweiteiligen Adaptern kombiniert werden. Ferner ist ein kombiniertes Einmalteil mit vorderem und hinterem Teil aus einem Werkzeug, ggfs. auch als sogenanntes Zweikomponenten-Spritzgußteil, möglich.

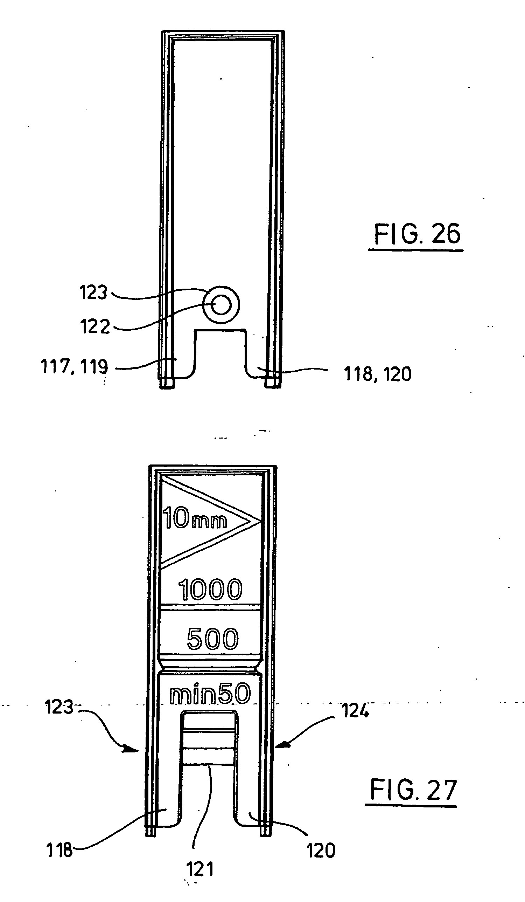

Die Küvette von Fig. 26 bis 28 ist nicht Gegenstand dieser Anmeldung. Sie ist lediglich zur Veranschaulichung der beanspruchten Erfindung beschrieben.

Die Küvette gemäß Fig. 26 bis 28 entspricht weitgehend der Küvette gemäß Ausführungsbeispiel der DE 198 26 470 C1, die durch Bezugnahme einbezogen ist. In Abweichung von der vorbekannten Küvette ist jedoch das zwischen den vier Füßen 117, 118, 119, 120 angeordnete kastenförmige Unterteil 121 nicht innen zu einem Hohlraum der Küvette hin geöffnet, sondern geschlossen. Ferner verläuft durch dieses Unterteil 121 ein zu beiden Seiten hin offener Kanal 122, der zu beiden Außenseiten hin trichterförmige Erweiterungen 123, 124 aufweist.

Die Küvette besitzt die Form einer handelsüblichen Küvette, so dass sie in ein handelsübliches Photomctcr bzw. Spektrometer einsetzbar ist.

Durch den auf beiden Seiten offenen Kanal 122 hindurch können optische Messungen vorgenommen werden. Dadurch wird während einer Messung kein Licht durch eine Kunststoffwand der Küvette geleitet und somit die Messung nicht beeinflußt. Eine Leerwertmessung für jede Küvette ist nicht erforderlich.

Der Kanal 122 ist zu den Außenseiten der Küvette hin konisch aufgeweitet, so dass eine Überdosierung eine unwesentliche Erhöhung der optischen Schichtdicke bewirkt. Als Nebeneffekt erhält die Küvette so eine Einführungshilfe. Eine Pipettenspitze kann auf die Erweiterungen 123, 124 abgesetzt und der Kanal 122 so gefüllt werden, bis die Flüssigkeit aus der Grenze zwischen konischem und zylindrischem Bereich des Kanals 122 heraustritt. Die Flüssigkeit füllt nun den Kanal 122 vollständig aus und wird durch die Adhäsion bzw. Kapillarwirkung darin gehalten.

Die konischen Erweiterungen 123 können aufgerauht sein, um zum einen eine Blendcnwirkung zu erzielen und zum anderen bei unsachgemäßer Handhabung ein Austreten der Flüssigkeit zu vermeiden. Zusätzlich dazu kann dann unterhalb des Kanals 122 eine Wanne vorgesehen sein, die die austretende Flüssigkeit aufnehmen kann. Da der Kanal 122 deutlich kürzer als die Gesamtbreite der Küvette ist, kann die Flüssigkeit nur in diese Wanne fallen.

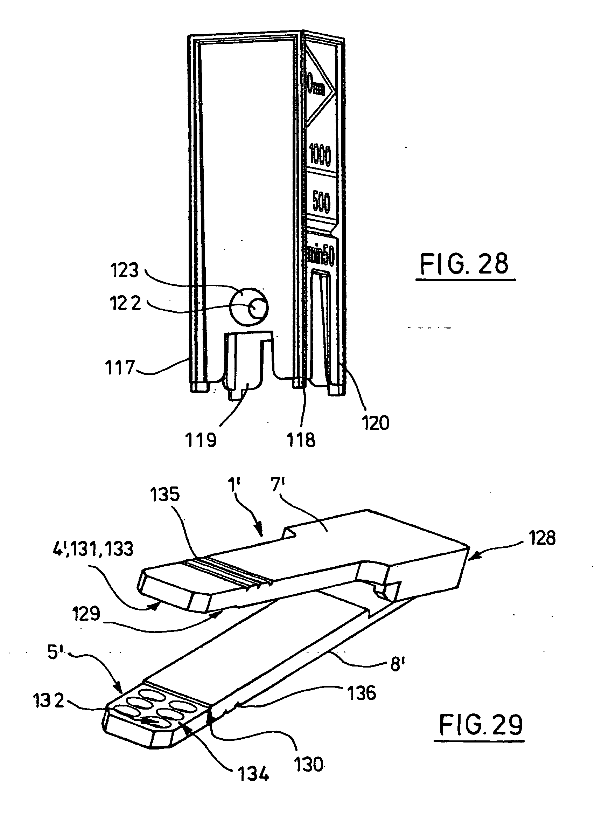

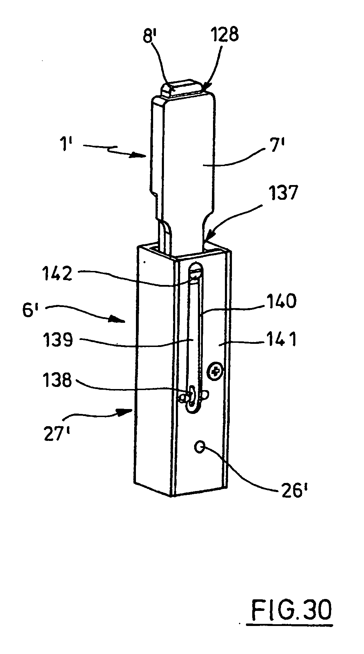

Bei dem Ausführungsbeispiel von Fig. 29 und 30 sind Elemente, die Elementen des Ausführungsbeispiels von Fig. 1 bis 4 entsprechen, mit derselben Bezugsziffer verschen, jedoch zusätzlich mit einem hochgestellten Strich (') gekennzeichnet.

Der Einsatz 1' ist ebenfalls in der Art einer Pinzette ausgeführt, wobei jedoch die Arme 7', 8' an ihren oberen Enden über ein Filmscharnier 128 miteinander verbunden sind.

Jeder streifenförmige Arm 7', 8' hat an einem Ende einen Absatz 129, 130 bzw. eine Abflachung, in dem die Messflächen 4', 5' angeordnet sind. Jede dieser Mcssflächen 4', 5' weist eine Gruppe (im Beispiel 6) kreisrunder Flächenteile 131, 132 zur Aufnahme von Probenflüssigkeit auf. Jeweils ein Paar der Flächenteilc '131, 132 liegt sich gegenüber, so dass es beim Zusammenschwenken der Arme 7', 8' zur Deckung kommt.

Die Flächenteile 131, 132 können vom Rest der Messflächen 4', 5' dadurch abgegrenzt sein, dass sie in kleinen Vertiefungen tiefer angeordnet sind.

Gemäß einer anderen Ausgestaltung sind die Flächenteile 131, 132 in Vertiefungen angeordnet und weisen die Flächenteile und die sie umgebenden weiteren Flächenteil 133, 134 der Messflächen 4', 5' eine hydrophobe Beschichtung auf. Gemäß einer anderen Ausgestaltung, bei der die Flächenteile 131, 132 nicht in Vertiefungen angeordnet sind, sind die Flächenteile 131, 132 hydrophil beschichtet, so dass die Proben darauf gehalten werden. Gemäß einer anderen Ausgestaltung, bei der die Flächenteile nicht in Vertiefungen angeordnet sind, sind die sie umgebenden weiteren Flächenteile 133, 134 der Messflächen 4', 5', die keine Proben aufnehmen sollen, hydrophob beschichtet. Gemäß einer anderen Ausgestaltung, bei der die Flächenteile 131 ,132 nicht in Vertiefungen angeordnet sind, sind die Flächenteile 131, 132 hydrophil beschichtet und sind die sie umgebenden weiteren Flächenteile 133, 134 hydrophob beschichtet.

Wenn die Arme 7', 8' zusammengeschwenkt sind, werden auf die Flächenteile 131, 132 der Mcssflächen 4', 5' gegebene Proben zwischen diesen aufgespannt.

Ferner haben die Arme 7', 8' an den Außenseiten jeweils eine Gruppe paralleler Rillen 135, 136, die sich quer zu ihrer Längsachse erstrecken. Die Rillen 135, 136 sind nahe dem freien Ende der Arme 7' und 8' angeordnet. Im Beispiel sind die Rillen 135, 136 auf den verschiedenen Armen 7', 8' im gleichen Abstand von den freien Enden der Arme 7', 8' angeordnet. Bei einer anderen Ausgestaltung, die nicht gezeigt ist, sind die Rillen 135, 136 auf den verschiedenen Armen 7' und 8' auf verschiedenen Höhen angeordnet. Bei noch einer weiteren Ausgestaltung, die nicht gezeigt sind, weist nur einer der Arme 7', 8' Rillen 135 bzw. 136 auf.

Der Einsatz 1' ist einteilig aus Kunststoff hergestellt. Aufgrund der Elastizität des Filmscharniers 128 nimmt er die Konfiguration von Fig. 29 selbsttätig ein.

Der Adapter 6' hat den quaderförmigen Umriss einer Standardküvette. Er ist im Wesentlichen quaderförmig. Er hat eine Aufnahme 137 mit rechteckigem Querschnitt, in die der Einsatz 1' von oben einstcckbar ist, wenn die Arme 7', 8' zusammen geschwenkt sind. In die Aufnahme 137 greift ein elastischer Rastvorsprung 138 des Adapters 6' ein, der in eine der Rillen 135 oder 136 des eingesteckten Einsatzes 1' eingreift. Hierdurch wird der Einsatz 1' in einer Höhenposition in der Aufnahme 137 verrastet.

Der elastische Rastvorsprung 138 ist als Rädchen ausgebildet, das am Ende einer Federzunge 139 drehbar gelagert ist. Die Federzunge 139 ist in einem Längsschlitz 140 in einer Seitenwand 141 des Adapters 6' angeordnet und am anderen Ende mittels einer Schraube 142 fixiert. Infolgedessen ist die Federzunge 139 innerhalb des Längsschlitzes 140 auslenkbar. Die Federzunge 139 wird ausgelenkt, wenn der als Rädchen ausgebildete Rastvorsprung 138 über die Außenseite eines Armes 7', 8' abrollt. Schließlich fällt der Restvorsprung 138 in eine der Rillen 135, 136 ein und hierdurch wird der Einsatz 1' in einer bestimmten Höhe im Adapter 6' fixiert.

Der Adapter 6' hat in zwei einander gegenüberliegenden Seitenwänden 141, 142 Durchgangsöffnungen 26', 27' für den Strahlengang einer optischen Messvorrichtung. Die Durchgangsöffnungen 26', 27' sind im unteren Drittel der Seitenwände 141, 142 etwa auf der Mittelachse derselben angeordnet.

In der in Fig. 30 gezeigten Raststellung sind die Flächenteile 131, 132, die sich in Fig. 29 rechts unten auf den Messflächen 4', 5' an den Armen 7', 8' befinden, genau zwischen den Durchgangsöffnungen 26', 27' angeordnet. Wenn der Adapter 6' mit dem Einsatz 1' in dieser Raststellung in einem Küvettenschacht eingesetzt wird, ist eine Probe zwischen diesen Flächenteilen 131, 132 der Mcssflächen 4', 5' messbar. In der nächsttieferen Raststellung rückt die Probe, die sich in Fig. 29 zwischen den mittleren Flächenteilen 131, 132 der rechten Spalte befindet, in den Strahlengang usw.

Durch Herausziehen des Einsatzes 1' aus der Aufnahme 137, Drehen um 180° um seine Längsachse und erneutes Einsetzen in die Aufnahme 137 können die Proben zwischen den Flächenteile 131, 132 , die sich in Fig. 29 in der linken Spalte unten auf den Messflächen 4',5' an den Armen 7', 8' befinden, in den Strahlengang gebracht werden.

In einer anderen Ausgestaltung wird das Befüllen des Einsatzes 1' bei zusammengeschwenkten Armen 7', 8' dadurch begünstigt, dass die Arme 7', 8' an den beiden seitlichen Rändern der Messflächen 4',5' kleine Öffnungen bzw. Führungen für eine Pipettenspitze haben, die sich von den seitlichen Rändern bis zu den Flächenteilen 131, 132 erstrecken. In die Öffnungen bzw. Führungen kann eine Pipettenspitze eingesetzt werden, so dass mittels einer Pipette Proben auf die Flächenteile 131, 132 der zusammengeschwenkten Messflächen 4', 5' gegeben werden können.

Die beschriebenen Ausführungsbeispiele dienen der Veranschaulichung der Erfindung. Die Erfindung ist jedoch nicht auf die Ausführungsbeispiele beschränkt.

## Patentansprüche

1. Küvette umfassend jeweils mindestens eine Messfläche (4, 5, 83, 84) an zwei Armen (7, 8, 67, 68), die schwenkbar miteinander verbunden sind, so dass sie aus einer auseinander geschwenkten Lage in eine Messposition zusammen schwenkbar sind, in der die beiden Messflächen (4, 5, 83, 84) einen Abstand zum Positionieren einer Probe zwischen den Messflächen (4, 5, 83, 84) aufweisen, und Mittel zum Positionieren der beiden Arme (7, 8, 67, 68) in Messposition in einem Standardküvettenschacht mit einem rechteckigen Querschnitt einer optischen Messvorrichtung mit einer Probe zwischen den beiden Messflächen (4, 5, 83, 84) in einem den Standardküvettenschacht durchquerenden Strahlengang der optischen Messvorrichtung, wobei die Mittel zum Positionieren der beiden Arme (7, 8, 67, 68) eine an den Standardküvettenschacht angepasste Form aufweisen.

2. Küvette nach Anspruch 1 mit Mitteln zum Positionieren der beiden in Messposition angeordneten Arme (7, 8, 67, 68) in verschiedenen Positionen in einem Standardküvettenschacht.

3. Küvette nach Anspruch 2, mit Mitteln zum Positionieren der beiden in Messposition angeordneten Arme (7, 8, 67, 68) in verschiedenen Höhenpositionen und/oder verschiedenen horizontalen Positionen in einem Standardküvettenschacht.

4. Küvette nach einem der Ansprüche 1 bis 3, bei dem die Mittel zum Positionieren einen an einen Standardküvettenschacht angepassten Querschnitt der in Messposition zusammen geschwenkten Arme (6, 7, 67, 68) haben.

5. Küvette nach einem der Ansprüche 1 bis 4, bei der die beiden Arme (67, 68) über ein Gelenk (69) schwenkbar miteinander verbunden sind.

6. Küvette nach einem der Ansprüche 1 bis 5, die Mittel zum Verhindern des Zusammenschwenkens der Arme in Messposition und/oder die Mittel zum lösbaren Verriegeln (85 bis 88, 89 bis 92) der beiden Arme (67, 68) in der Messposition aufweist.

7. Küvette nach einem der Ansprüche 1 bis 6, die die beiden Messflächen (83, 84) an zwei Einsatzteilen (81, 82) und Mittel zum lösbaren oder unlösbaren Halten der beiden Einsatzteilen an den Armen (67, 68) aufweist.

8. Küvette nach einem der Ansprüche 1 bis 3, bei der ein Einsatz (1) die beiden Arme (7, 8) mit den beiden Messflächen (4, 5) aufweist und die Mittel zum Positionieren einen Adapter (6) zum Einsetzen in den Standardküvettenschacht und Mittel von Einsatz und Adapter zum lösbaren Halten des Einsatzes (1) im Adapter (6) mit den Messflächen (4, 5) in dem Abstand voneinander zum Positionieren einer Probe zwischen den Messflächen (4, 5) aufweisen.

9. Küvette nach Anspruch 8, bei der der Einsatz (1) eine Pinzette mit den beiden Messflächen (4, 5) an den freien Enden der Arme (7, 8) ist.

10. Küvette nach einem der Ansprüche 1 bis 9, die Mittel zum Verhindern des Zusammenschwenkens der beiden Arme in einer Messposition, in der die beiden Messflächen (4, 5) einen bestimmten Abstand voneinander haben, und/oder Mittel zum lösbaren Verriegeln der beiden Arme (7, 8) in der Messposition aufweist.

11. Küvette nach einem der Ansprüche 8 bis 10, bei der die Mittel zum lösbaren Halten eine Aufnahme des Adapters (6) und eine Kontur des Einsatzes (1) umfassen, deren Geometrien aufeinander abgestimmt sind, daß der Einsatz in mindestens eine bestimmte Stellung in die Aufnahme einsetzbar ist.

12. Küvette nach einem der Ansprüche 1 bis 11, bei der mindestens eine Messfläche (83, 84) oder mindestens ein Einsatzteil (81, 82) aus Kunststoff oder Quarzglas oder Glas und/oder mindestens ein Arm und/oder der Einsatz und/oder der Adapter aus Kunststoff und/oder Metall bestehen und/oder bei der die beiden Messflächen (83, 84) und/oder Einsatzteile (81, 82) optisch transparent sind.

13. Küvette nach einem der Ansprüche 1 bis 12, bei der mindestens eine Messfläche (83, 84) einen weniger hydrophoben oder hydrophilen Spot aufweist.

14. Verfahren zur optischen Untersuchung kleiner Flüssigkeitsmengen unter Verwendung einer Küvette gemäß einem der Ansprüche 1 bis 13.

## Claims

1. A cuvette, comprising at least one measuring surface (4, 5, 83, 84) on each one of two arms (7, 8, 67, 68) which are pivotally connected to each other such that from out a swung apart condition, they can be swung together into a measurement position wherein the two measuring surfaces (4, 5, 83, 84) are in a distance for positioning a sample between the measuring surfaces (4, 5, 83, 84), and means for positioning the two arms (7, 8, 67, 68) in the measurement position in a standard cuvette shaft of an optical measuring device with rectangular cross section, with a sample between the two measuring surfaces (4, 5, 83, 84) in a beam path which passes through the standard cuvette shaft of the optical measuring device, wherein the means for positioning the two arms (7, 8, 67, 68) have a shape that is adapted to the standard cuvette shaft.

2. The cuvette according to claim 1, with means for positioning the two arms (7, 8, 67, 68) arranged in the measurement position in different positions in a standard cuvette shaft.

3. The cuvette according to claim 2, with means for positioning the two arms (7, 8, 67, 68) arranged in the measurement position in different height positions and/or different horizontal positions in a standard cuvette shaft.

4. A cuvette according to any one of claims 1 to 3, wherein the means for positioning have a cross section of the arms (6, 7, 67, 68) swung together in the measurement position that is adapted to a standard cuvette shaft.

5. A cuvette according to any one of claims 1 to 4, wherein the two arms (67, 68) are pivotally connected to each other via a hinge (69).

6. A cuvette according to any one of claims 1 to 5, which comprises means for preventing the arms from being swung together in the measurement position and/or means for releasably locking (85 to 88, 89 to 92) the two arms (67, 68) in the measurement position.

7. A cuvette according to any one of claims 1 to 6, which has the two measuring surfaces (83, 84) on two insert parts (81, 82) and means for releasably or unreleasably holding the two insert parts on the arms (67, 68).

8. A cuvette according to any one of claims 1 to 3, wherein an insert (1) comprises the two arms (7, 8) with the two measuring surfaces (4, 5), and the means for positioning comprise an adapter (6) for insertion into the standard cuvette shaft and means of insert and adapter for releasably holding the insert (1) in the adapter (6) with the measuring surfaces (4, 5) in the distance from each other in order to position a sample between the measuring surfaces (4, 5).

9. The cuvette according to claim 8, wherein the insert (1) is a pincette with the two measuring surfaces (4, 5) on the free ends of the arms (7, 8).

10. A cuvette according to any one of claims 1 to 9, which comprises means for preventing the two arms from being swung together in a measurement position in which the two measuring surfaces (4, 5) are in a defined distance from each other, and/or means for releasably locking the two arms (7, 8) in the measurement position.

11. A cuvette according to any one of claims 8 to 10, wherein the means for releasably holding comprise a receptacle of the adapter (6) and a contour of the insert (1) whose geometries are matched to each other, so that the insert can be inserted into the receptacle in at least one certain position.

12. A cuvette according to any one of claims 1 to 11, wherein at least one measuring surface (83, 84) or at least one insert part (81, 82) consist(s) of plastics or quartz glass or glass, and/or at least one arm and/or the insert and/or the adapter consist(s) of plastics and/or metal, and/or wherein the two measuring surfaces (83, 84) and/or insert parts (81, 82) are optically transparent.

13. A cuvette according to any one of claims 1 to 12, wherein at least one measuring surface (83, 84) comprises a less hydrophobic or hydrophilic.

14. A method for optically examining small amounts of liquid using a cuvette according to any one of claims 1 to 13.

## Revendications

1. Cuvette, comprenant au moins une surface de mesure (4, 5, 83, 84) sur chacun de deux bras (7, 8, 67, 68) qui sont reliés de façon pivotante tellement qu'ils peuvent être pivotés d'une condition éloignée l'un de l'autre vers une position de mesure, dans laquelle les deux surfaces de mesure (4, 5, 83, 84) sont écartées pour permettre le positionnement d'un échantillon entre les surfaces de mesure (4, 5, 83, 84), et des moyens pour la mise en place des deux bras (7, 8, 67, 68) dans la position de mesure dans un puits de cuvette standard avec une section transversale rectangulaire d'un dispositif de mesure optique, avec un échantillon entre les deux surfaces de mesure (4, 5, 83, 84) dans une trajectoire de faisceau qui passe à travers le puits de cuvette standard du dispositif de mesure optique, les moyens pour la mise en place des deux bras (7, 8, 67, 68) ayant une forme adaptée au puits de cuvette standard.

2. Cuvette selon la revendication 1, avec des moyens pour la mise en place des deux bras (7, 8, 67, 68) arrangés dans la position de mesure en positions différentes dans un puits de cuvette standard.

3. Cuvette selon la revendication 2, avec des moyens pour la mise en place des deux bras (7, 8, 67, 68) arrangés dans la position de mesure dans différentes positions en hauteur et/ou dans différentes positions horizontales dans un puits de cuvette standard..

4. Cuvette selon l'une quelconque des revendications 1 to 3, dans laquelle les moyens pour la mise en place ont une section transversale des bras (6, 7, 67, 68) pivotés ensemble dans la position de mesure, ladite section transversale étant adaptée à un puits de cuvette standard.

5. Cuvette selon l'une quelconque des revendications 1 à 4, dans laquelle les deux bras (67, 68) sont articulés l'un à l'autre pour pivoter à travers une charnière (69).

6. Cuvette selon l'une quelconque des revendications 1 à 5, qui comprend des moyens pour empêcher le pivotement de l'un vers l'autre des bras dans la position de mesure et/ou des moyens pour verrouiller (85 to 88, 89 to 92) les deux bras (67, 68) dans la position de mesure de manière détachable.

7. Cuvette selon l'une quelconque des revendications 1 à 6, qui a les deux surfaces de mesure (83, 84) sur deux pièces d'insertion (81, 82) et des moyens pour tenir les deux pièces d'insertion sur les bras (67, 68) de manière détachable ou non détachable.

8. Cuvette selon l'une quelconque des revendications 1 à 3, dans laquelle une garniture (1) comprend les deux bras (7, 8) avec les deux surfaces de mesure (4, 5), et les moyens pour la mise en place comprennent un adaptateur (6) pour l'insertion dans le puits de cuvette standard et des moyens de garniture et adaptateur pour tenir la garniture (1) dans l'adaptateur (6) de manière détachable, avec les surfaces de mesure (4, 5) en l'écart l'une de l'autre, afin de positionner un échantillon entre les surfaces de mesure (4, 5).

9. Cuvette selon la revendication 8, dans laquelle la garniture (1) est une pincette avec les deux surfaces de mesure (4, 5) sur les extrémités libres des bras (7, 8).

10. Cuvette selon l'une quelconque des revendications 1 à 9, qui comprend des moyens pour empêcher le pivotement de l'un vers l'autre des deux bras dans une position de mesure dans laquelle les deux surfaces de mesure sont en un écart défini l'une de l'autre, et/ou des moyens pour verrouiller les deux bras (7, 8) dans la position de mesure de manière détachable.

11. Cuvette selon l'une quelconque des revendications 8 à 10, dans laquelle les moyens pour tenir de manière détachable comprennent un logement de l'adaptateur (6) et un contour de la garniture (1) dont les géométries sont adaptées les unes aux autres de sorte que la garniture puisse être insérée dans au moins une position définie dans le logement.

12. Cuvette selon l'une quelconque des revendications 1 à 11, dans laquelle au moins une surface de mesure (83, 84) ou au moins une pièce d'insertion (81, 82) sont en matière plastique ou verre quartzeux ou verre, et/ou au moins un bras et/ou la garniture et/ou l'adaptateur sont en matière plastique et/ou métal, et/ou dans laquelle les deux surfaces de mesure (83, 84) et/ou des pièces d'insertions (81, 82) sont optiquement transparentes.

13. Cuvette selon l'une quelconque des revendications 1 à 12, dans laquelle au moins une surface de mesure (83, 84) comporte une tache moins hydrophobe ou hydrophile.

14. Procédé servant à effectuer l'examen optique de petites quantités de liquide en utilisant une cuvette selon l'une quelconque des revendications 1 à 13.
